# EUROPÄISCHE PATENTSCHRIFT

(11) **EP 1 330 341 B1**
(45) Veröffentlichungstag und Bekanntmachung des Hinweises auf die Patenterteilung: **28.12.2005**
(21) Anmeldenummer: 01983576.8
(22) Anmeldetag: 31.10.2001
(51) Int. Cl.: B26B 5/00

(54) **KÜCHENGERÄT ZUM SCHNEIDEN VON SCHNEIDGUT**
KITCHEN APPLIANCE FOR SLICING VARIOUS PRODUCTS
APPAREIL DE CUISINE POUR COUPER DIVERS PRODUITS

(30) Priorität: 02.11.2000 DE 10054174
(43) Veröffentlichungstag der Anmeldung: 30.07.2003
(73) Patentinhaber: Börner Kunststoff- und Metallwarenfabrik GmbH, 54526 Landscheid-Niederkail (DE)
(72) Erfinder: BÖRNER, Jürgen, 54526 Landscheid-Niederkail (DE)
(74) Vertreter: Steil, Christian
(86) Internationale Anmeldenummer: PCT/EP2001/012651
(87) Internationale Veröffentlichungsnummer: WO 2002/036312

(56) Entgegenhaltungen:
- EP-A- 0 306 017
- DE-A- 19 827 077
- DE-U- 8 909 068
- GB-A- 848 046
- US-A- 4 624 166

## Beschreibung

Die vorliegende Erfindung betrifft ein Küchengerät zum Schneiden von Schneidgut wie Gemüse, Obst, etc., mit einem Grundkörper, einer Führungsfläche, auf der das Schneidgut hin- und herbewegbar ist, einem Messer, das zum Schneiden gegenüber der Führungsfläche versetzt angeordnet ist, so daß von einem auf der Führungsfläche in Führungsrichtung auf das Messer zu bewegten Schneidgut ein Stück abgeschnitten wird, wobei der Versatz zwischen dem Messer und der Führungsfläche die Schnittstärke bestimmt, und einem auswechselbaren Einsatz zur Veränderung der Schnittstärke.

Ein solches Küchengerät ist bspw. bekannt aus den Druckschriften DE 298 21 132 U1, EP 30 6 017 und DE 89 09 068 U1.

Derartige Küchengeräte werden generell auch als Küchenhobel bezeichnet. Zum Schneiden bspw. von Gurken wird der Hobel generell über eine Schüssel gehalten, und durch Hin- und Herbewegen der Gurke werden nach und nach Scheiben hiervon abgeschnitten. Die Scheiben fallen durch einen Schlitz zwischen dem Messer und der Führungsfläche nach unten in die Schüssel.

Die Führungsfläche wird häufig auch als Anlauffläche bezeichnet. In Führungsrichtung schließt sich an das Messer in der Regel eine weitere Führungsfläche an, die auch Auslauffläche genannt wird.

Das Messer ist generell quer zur Führungsrichtung angeordnet. Es kann bspw. senkrecht zur Führungsrichtung angeordnet sein oder leicht schräg hierzu. Besonders günstig ist eine Gestaltung als V-Messer, bei dem zwei schräg angeordnete Messer etwa zentral zusammenlaufen.

Das Küchengerät kann aus Metall bestehen, häufig besteht der Grundkörper jedoch aus Kunststoff.

Aus der eingangs genannten DE 298 21 132 U1 ist ein Küchengerät bekannt, bei dem zwei seitliche Rahmenteile einstückig mit einer oberen Führungsplatte verbunden sind. Ferner weisen die Rahmenteile Nuten zum Einschub einer unteren Führungsplatte in verschiedenen Höhen auf.

Die DE 198 27 077 A1 offenbart eine Vorrichtung zum Zerkleinern von Lebensmitteln, mit einer Grundplatte und einem austauschbaren Zerkleinerungseinsatz, der seitlich in eine Öffnung eingeschoben ist. Der Zerkleinerungseinsatz besteht aus Kunststoff und weist an seiner Oberseite ein quer verlaufendes Messer auf. In Schneidrichtung vor dem Messer ist eine Zuführbahn mittels eines Filmscharniers verschwenkbar gelagert und in jeweils einer von mehreren Schwenkpositionen durch einen beweglichen Verstellhebel abgestützt.

Zur Schnitthöhenverstellung ist es ferner bei dem bekannten V-Hobel der Anmelderin möglich, einen die untere Führungsfläche bildenden, in Führungsrichtung in den Hobel einschiebbaren Einsatz auszutauschen oder zu wenden, um die Schnittstärke einzustellen.

Aus der WO 95/24995 ist ein Gemüsehobel zum Schneiden von Würfeln bekannt, der eine Anlauffläche und eine hierzu parallele Auslauffläche aufweist, an deren Vorderkante ein V-förmiges Messer angeordnet ist. In Schneidrichtung vor dem Messer und hinter dem Messer ist jeweils eine Reihe von in Querrichtung beabstandeten senkrechten Messern vorgesehen. Wenn man das Schneidgut zwischen aufeinanderfolgenden Schneidvorgängen (Schnitten) um 90° wendet, lassen sich mit dem Gemüsehobel Würfel schneiden. Die Größe der Würfel ist nicht variabel.

Die eingangs genannte DE 89 09 068 U1 offenbart einen Waffelschneider mit einem Grundkörper und einem Einsatz in Form einer Schieberplatte. Die Aufnahme des Grundkörpers für die Schieberplatte weist eine als geschlossene Fläche ausgebildete Abstützplatte auf. Die Abstützplatte weist eine Mehrzahl von Vertiefungen auf. An der Unterseite der Schieberplatte ist eine entsprechende Mehrzahl von nach unten vorstehenden Nasen vorgesehen. Die Schieberplatte ist in Führungsrichtung in zwei unterschiedlichen Positionen an der Aufnahme einrastbar. In der einen Position greifen die Nasen in die Vertiefungen. In der anderen Position liegen die Nasen auf der Abstützplatte auf. Durch Herausdrücken der Schieberplatte aus den Vertiefungen und anschließenden Versatz der Schieberplatte in Führungsrichtung läßt sich somit die Schnittstärke verringern.

Schließlich betrifft die eingangs genannte EP 0 306 017 A2 einen Küchenhobel, der einen Grundkörper und einen Einsatz aufweist. Der Einsatz ist in Führungsrichtung in den Grundkörper einschiebbar. Der Einsatz weist zwei Plattenteile auf, deren Abstand verstellbar ist. In einer Ausgestaltung sind die Plattenteile gegeneinander verschraubbar. In einer weiteren Ausgestaltung ist ein Keil zwischen den Platten angeordnet. In beiden Ausgestaltungen werden die Plattenteile in einer Richtung senkrecht zur Führungsrichtung gegeneinander verstellt.

Es ist die Aufgabe der Erfindung, ein verbessertes Küchengerät anzugeben, das eine Veränderung der Schnittstärke auf einfache Art und Weise ermöglicht.

Diese Aufgabe wird bei dem eingangs genannten Küchengerät gemäß einem ersten Aspekt der Erfindung dadurch gelöst, daß der Einsatz im eingesetzten Zustand im Ganzen an dem Grundkörper beweglich gelagert ist und in unterschiedlichen Positionen an dem Grundkörper festlegbar ist, um die Schnittstärke zu verändern.

Das erfindungsgemäße Küchengerät besteht folglich aus wenig Einzelteilen. Ferner ist eine Veränderung der Schnittstärke auf einfache Weise möglich. Es ist insbesondere nicht notwendig, zum Verändern der Schnittstärke einen Einsatz auszuwechseln oder herauszunehmen und anschließend in einer anderen Position wieder einzusetzen.

Besonders bevorzugt ist es, wenn der Einsatz im eingesetzten Zustand im wesentlichen parallel zur Führungsrichtung versetzbar gelagert und in unterschiedlichen Parallelversatzpositionen an dem Grundkörper festlegbar ist, um die Schnittstärke zu verändern.

Durch den parallelen Versatz des Einsatzes wird zum einen bei allen Schnittstärken eine gleichbleibend gute Schnittqualität erreicht, da der Anstellwinkel zwischen Führungsfläche und Messer im wesentlichen gleich bleibt, insbesondere 0° beträgt.

Zum anderen ist es bei dieser Ausführungsform konstruktiv vergleichsweise einfach, den Einsatz im eingesetzten Zustand im Ganzen beweglich zu lagern und in unterschiedlichen Positionen festzulegen.

Die parallele Versetzbarkeit kann durch verschiedenste Maßnahmen realisiert werden, bspw. durch Parallelogrammgelenke.

Besonders bevorzugt ist es jedoch, wenn eine Parallelführung zwischen dem Grundkörper und dem Einsatz wenigstens zwei Rampenführungen aufweist, die so angeordnet sind, daß ein Verschieben des Einsatzes in einer ersten Richtung zwangsweise einen Versatz in einer Richtung senkrecht hierzu bewirkt.

Die erste Richtung liegt dabei vorzugsweise in einer Grundebene des Grundkörpers und ist bspw. bei einem V-Hobel vorzugsweise die Führungsrichtung. Bei Küchengeräten, bei denen das Messer gerade ausgerichet ist, kann die erste Richtung auch parallel zur Messerschneide liegen.

Die obige Aufgabe wird bei dem eingangs genannten Küchengerät gemäß einem zweiten Aspekt der Erfindung dadurch gelöst, daß der Einsatz gegenüber einer Aufnahme des Grundkörpers in Führungsrichtung beweglich ausgebildet ist und daß an der Aufnahme und/oder an dem Einsatz Rampenführungen vorgesehen sind, so daß eine Bewegung des Einsatzes in Führungsrichtung eine Bewegung quer zur Führungsrichtung bewirkt, um die Schnittstärke zu verändern.

Das Küchengerät gemäß dem zweiten Aspekt der Erfindung ist robust und kann mit wenigen Teilen realisiert werden. Die Schnittstärkenverstellung erfolgt, indem der Einsatz in Führungsrichtung in bezug auf die Aufnahme bewegt wird, und durch die Rampenführungen wird dabei eine Längsbewegung zwangsweise in eine "Hub"-Bewegung umgesetzt, also der Abstand zwischen der Führungsfläche und dem Messer verändert.

Die hierdurch bedingte Veränderung des Längsabstandes der Führungsfläche von dem Messer in Führungsrichtung wird dabei in Kauf genommen. Es hat sich gezeigt, daß die Veränderung dieses Längsabstandes in der Praxis weitgehend vernachlässigbar ist.

Durch die Rampenführungen läßt sich jedoch vergleichsweise einfach realisieren, daß die Führungsfläche in jeder Schnittstärkeneinstellung etwa parallel zu der Messerebene verläuft. Hierdurch können im Schneidvorgang Verdrängungen an dem Schneidgut vermieden werden, der Schnitt geht unabhängig von der jeweils eingestellten Schnittstärke glatt und behinderungsfrei durch das Schneidgut.

Im Stand der Technik hingegen wurde generell versucht, auch bei einer Schnittstärkenverstellung durch Parallelversatz den Längsabstand zwischen der Endkante der Führungsfläche und der gegenüberliegenden Messerschneide möglichst konstant zu halten. Beispielsweise in der obengenannten EP 0 306 017 A2 ist die Ausgestaltung des Einsatzes dreiteilig gewählt, um zwei gegenüberliegende Plattenteile durch einen dazwischen angeordneten Keil genau senkrecht zur Führungsrichtung verstellen zu können.

Die ebenfalls obengenannte DE 89 09 068 U1 offenbart zwar, eine Schieberplatte in zwei unterschiedlichen Axialpositionen an einem Grundkörper einzurasten, um eine Schnittstärkenverstellung zu erzielen. Bei diesem bekannten Küchengerät wird jedoch an einem Bewegungsmuster zur Verstellung festgehalten, das vergleichsweise unpraktisch ist. Denn dort ist die Schieberplatte zum Verringern der Schnittstärke zunächst senkrecht zur Führungsrichtung aus den Vertiefungen herauszuheben. Zu diesem Zweck ist eine entsprechende Öffnung in dem Grundkörper vorgesehen. Anschließend erfolgt der Axialversatz in Führungsrichtung, bis eine zweite Raststellung erreicht ist. Diese Anordnung leidet ferner an dem Nachteil, daß generell nur zwei Schnittstärken auswählbar sind, nicht eine Mehrzahl von Schnittstärken.

Die Lösungen gemäß dem ersten und dem zweiten Aspekt der vorliegenden Erfindung erlauben jedoch eine Schnittstellenverstellung in mehr als zwei Stufen, beispielsweise drei oder vier oder sogar mehr Stufen. In manchen Fällen ist die Verstellung sogar stufenlos.

Die Aufgabe wird folglich auch gemäß dem zweiten Aspekt der Erfindung vollkommen gelöst.

Von besonderem Vorteil ist es, wenn die Aufnahme einstückig mit dem Grundkörper ausgebildet ist.

Bei dieser Ausgestaltung ist es möglich, das Küchengerät mit im wesentlichen zwei Teilen zu realisieren, dem Grundkörper einerseits und dem Einsatz (oder einer Mehrzahl von unterschiedlichen Einsätzen) andererseits.

In einer alternativen Ausgestaltung ist die Aufnahme an einem Adapter ausgebildet, der an dem Grundkörper in einer Betriebsposition festlegbar ist.

Diese Ausführungsform ist insbesondere vorteilhaft zum Nachrüsten existierender Küchengeräte, insbesondere der bekannten V-Hobel der Anmelderin.

Wie oben erwähnt, ermöglicht der V-Hobel des Standes der Technik eine Schnittstärkenveränderung, indem Einsätze ausgetauscht oder umgedreht werden. Durch das Bereitstellen des Adapters kann zunächst der Adapter anstelle eines Einsatzes in den Grundkörper des V-Hobels des Standes der Technik eingesetzt werden. Die Kombination aus Grundkörper und Adapter hat dann die gleiche oder im wesentlichen die gleiche Funktionalität wie ein Grundkörper, an dem die Aufnahme einstückig ausgebildet ist.

Von besonderesm Vorzug ist es dabei, wenn der Adapter in Führungsrichtung in den Grundkörper einschiebbar ist und in der Betriebsposition einrastet.

Der Adapter selbst ist folglich an dem Grundkörper in einer einzelnen Position, der Betriebsposition, an dem Grundkörper festgelegt. Durch die Einschiebbarkeit in Führungsrichtung läßt sich der Adapter insbesondere mit den bekannten, obengenannten V-Hobeln des Standes der Technik kombinieren.

Gemäß einer bevorzugten Ausführungsform ist der Einsatz gegenüber der Aufnahme in Führungsrichtung beweglich ausgebildet, wenn der Adapter in der Betriebsposition festgelegt ist.

Bei dieser Ausführungsform werden der erste und der zweite Aspekt der vorliegenden Erfindung realisiert. Der Einsatz ist im eingesetzten Zustand in Führungsrichtung verschieblich, um die Schnittstärke zu verstellen.

Gemäß einer alternativen bevorzugten Ausführungsform ist der Einsatz gegenüber der Aufnahme beweglich, wenn der Adapter aus der Betriebsposition entnommen ist, und der Einsatz ist gegenüber der Aufnahme nicht beweglich, wenn der Adapter in der Betriebsposition festgelegt ist.

Bei der alternativen Ausführungsform erfolgt ein relativer axialer Versatz zwischen Einsatz und Adapter zur Schnittstärkenveränderung dann, wenn der Adapter aus dem Grundkörper entnommen ist. Sobald der Adapter, mit dem in einer bestimmten Position festgelegten Einsatz, in der Betriebsposition festgelegt ist, ist die Verstellfunktion in Führungsrichtung verriegelt.

Während die erste alternative Ausführungsform schnell und ohne Aufwand einen Wechsel der Schnittstärke ermöglicht, kann bei der zweiten alternativen Ausführungsform eine insgesamt größere Stabilität realisiert werden.

Weiterhin ist es bevorzugt, wenn der Winkel der Rampenführungen in bezug auf die Führungsfläche im Bereich zwischen 5° und 50° liegt, vorzugsweise im Bereich zwischen 5° und 30°.

Auf diese Weise wird bei einem angemessen kleinen Verschiebebetrag in der ersten Richtung (bzw. Führungsrichtung) ein angemessen großer Versatzbereich zum Verstellen der Schnittstärke realisiert.

Gemäß einer vorteilhaften Ausführungsform weisen die Rampenführungen Rampen am Grundkörper auf, auf denen Gegenstücke des Einsatzes aufliegen.

Generell ist es zwar auch denkbar, Rampen am Einsatz und Gleitstücke am Grundkörper vorzusehen. Die Realisierung mit Rampen am Grundkörper hat jedoch den Vorteil der konstruktiv einfacheren Ausgestaltung des Einsatzes. Da zu einem Grundkörper häufig mehrere Einsätze vorhanden sind, läßt sich das Küchengerät insgesamt konstruktiv einfacher realisieren.

Dabei ist es besonders bevorzugt, wenn wenigstens zwei Rampenführungen an gegenüberliegenden Seiten des Grundkörpers ausgebildet sind und wenn die Gleitstücke durch Stifte gebildet sind, die gegenüber Seiten des Einsatzes vorstehen.

Auf diese Weise ergibt sich eine kompakte Realisierung der Parallelführung.

Ferner ist es bevorzugt, wenn wenigstens ein zentraler Rampenabschnitt unterhalb des Einsatzes angeordnet ist, um den Einsatz abzustützen.

Auf diese Weise wird erreicht, daß sich der Einsatz auch bei starkem Druck von oben nicht durchbiegt.

Dabei ist es besonders bevorzugt, wenn der zentrale Rampenabschnitt benachbart zu dem Messer angeordnet ist.

Auf diese Weise wird gewährleistet, daß der Versatz zwischen Messer und Führungsfläche (die Schnittstärke) unabhängig von dem auf die Führungsfläche ausgeübten Druck konstant bleibt.

Gemäß einer alternativen Ausführungsform ist der Einsatz im eingesetzten Zustand um eine versetzt zum Messer angeordnete Schwenkachse verschwenkbar gelagert und in unterschiedlichen Schwenkpositionen an dem Grundkörper festlegbar, um die Schnittstärke zu verändern.

Bei dieser Ausführungsform lassen sich die Mittel zum Festlegen des Einsatzes an dem Grundkörper konstruktiv besonders einfach realisieren.

Insgesamt ist es bevorzugt, wenn die Schnittstärke stufenlos einstellbar ist.

Zu diesem Zweck ist es von Vorteil, wenn eine Klemmeinrichtung vorgesehen ist, um den Einsatz in einer beliebigen Position an dem Grundkörper festzulegen.

Bei stufenloser Einstellbarkeit läßt sich das Küchengerät an die unterschiedlichsten Schneidaufgaben anpassen.

Gemäß einer alternativen Ausführungsform ist die Schnittstärke in Stufen einstellbar.

Dabei ist es von Vorteil, wenn eine Rasteinrichtung zum Festlegen des Einsatzes in einer von mehreren Positionen an dem Grundkörper vorgesehen ist.

Insbesondere bei einer Realisierung des Grundkörpers und/oder des Einsatzes aus Kunststoff ist eine Rasteinrichtung vergleichsweise einfach zu realisieren.

Ferner ist es insgesamt von Vorteil, wenn der Einsatz in eine Position versetzbar ist, in der die dem Messer gegenüberliegende Kante der Führungsfläche auf der Höhe oder oberhalb der Schneide des Messers liegt.

In einer solchen (Ruhe-)position, die insbesondere als Kinderschutz eingestellt wird, ist es ausgeschlossen, daß man versehentlich gegen die Schneide des Messers greift. Diese ist durch die Kante der Führungsfläche abgedeckt.

Ferner ist es von Vorteil, wenn bei einem Einsatz an der Führungsfläche eine quer zur Führungsrichtung ausgerichtete Reihe von senkrechten Messern vorgesehen ist.

Auf diese Weise ist es auf einfache Weise möglich, das Schneidgut nicht in Scheiben, sondern in Streifen zu schneiden.

Dabei ist es besonders bevorzugt, wenn der Einsatz in eine Position versetzbar ist, in der die Oberseite der Messerreihe gegenüber der Oberseite des Messers um ein Maß übersteht, das wenigstens so groß ist wie die Schnittstärke.

Auf diese Weise wird erreicht, daß das Schneidgut an der noch nicht abgeschnittenen Unterseite in Längsrichtung durch die Messer eingeritzt wird.

Wenn man vor einem anschließenden Schneidvorgang das Schneidgut um 90° oder einen ähnlichen Betrag verdreht, werden die eingeritzten Streifen nach der Art eines Kreuzmusters von den Messern quer durchtrennt und anschließend von dem - normalen - Messer abgeschnitten, so daß Quader entstehen.

Folglich ist es mit dem Küchengerät möglich, mit einem normalen Einsatz Scheiben zu schneiden, mit dem Einsatz mit der Messerreihe entweder Streifen einer großen Dicke oder Würfel einer kleineren Dicke zu schneiden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Ausführungsbeispiele der Erfindung sind in der Zeichnung dargestellt und werden in der nachfolgenden Beschreibung näher erläutert. Es zeigen:
- Fig. 1: eine erste Ausführungsform eines Küchengerätes in schematischer Darstellung gemäß dem ersten Aspekt der Erfindung;
- Fig. 2: eine zweite Ausführungsform eines Küchengerätes in schematischer Darstellung gemäß dem ersten Aspekt der Erfindung;
- Fig. 3: eine dritte Ausführungsform eines Küchengerätes in schematischer Darstellung gemäß dem ersten Aspekt der Erfindung;
- Fig. 4: eine Draufsicht auf eine vierte Ausführungsform eines Küchengerätes in schematischer Darstellung gemäß dem ersten und dem zweiten Aspekt der Erfindung;
- Fig. 5: eine Schnittansicht entlang der Linie V-V der Fig. 4;
- Fig. 6: eine schematische Detailansicht zur Erläuterung eines Kinderschutzes;
- Fig. 7: eine schematische Darstellung zur Erläuterung der Verwendung des Küchengerätes zum Schneiden von Würfeln;
- Fig. 8: eine alternative Ausführungsform einer Rampenführung;
- Fig. 9: eine perspektivische Ansicht eines Grundkörpers einer fünften Ausführungsform eines Küchengerätes gemäß dem ersten und dem zweiten Aspekt der Erfindung;
- Fig. 10: eine schematische Schnittansicht entlang der Linie X-X in Fig. 9;
- Fig. 11: eine Draufsicht auf eine Rasteinrichtung des Grundkörpers der Fig. 9 in vergrößerter Darstellung;
- Fig. 12: eine Ansicht eines Einsatzes für den in Fig. 9 gezeigten Grundkörper von unten;
- Fig. 13: eine Schnittansicht entlang der Linie XIII-XIII von Fig. 12;
- Fig. 14: eine Schnittansicht entlang der Linie XIV-XIV von Fig. 12;
- Fig. 15: eine schematische perspektivische Ansicht eines Adapters einer sechsten Ausführungsform eines Küchengerätes gemäß dem ersten und dem zweiten Aspekt der Erfindung;
- Fig. 16: eine Schnittansicht entlang der Linie XVI-XVI von Fig. 15;
- Fig. 17: eine Schnittansicht entlang der Linie XVII-XVII von Fig. 15 in vergrößerter Darstellung; und

- Fig. 18: eine perspektivische Darstellung eines Grundkörpers des Küchengerätes der sechsten Ausführungsform.

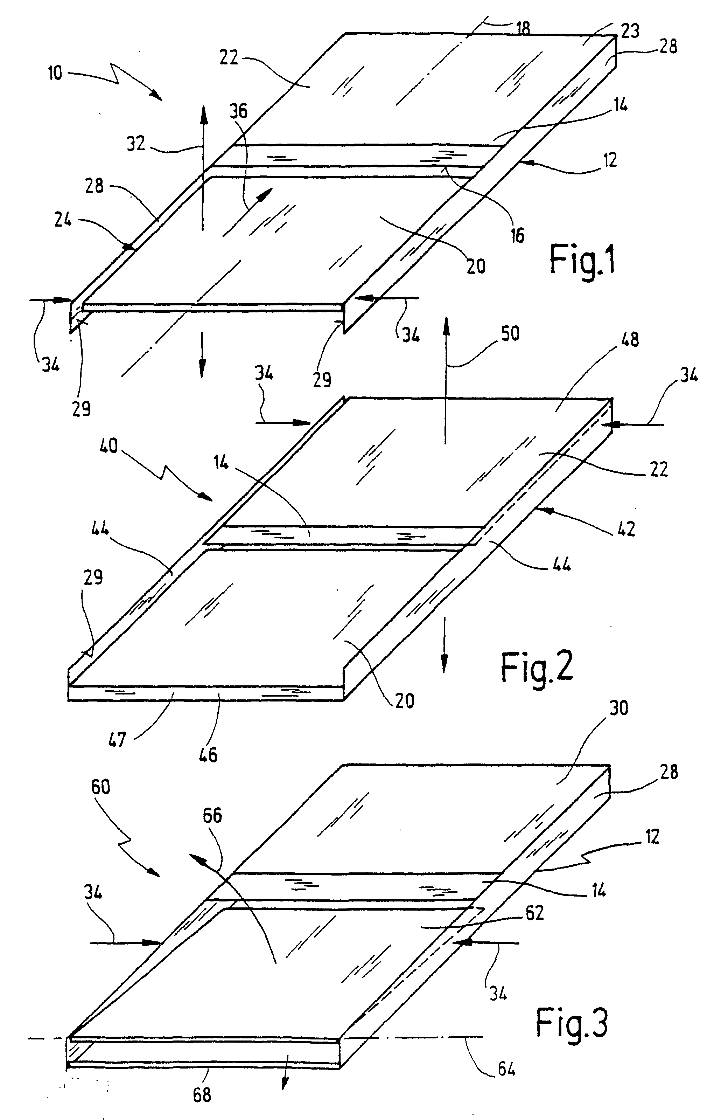

In Fig. 1 ist eine erste Ausführungsform des erfindungsgemäßen Küchengerätes generell mit 10 bezeichnet.

Das Küchengerät 10 weist einen generell etwa rechteckförmigen Grundkörper 12 auf, an dem ein Messer 14 mit einer Schneidkante 16 festgelegt ist.

Das Messer 14 ist als etwa rechteckiges Metallblatt ausgebildet und erstreckt sich senkrecht zu einer Längsachse 18 des Grundkörpers 12.

Es versteht sich, daß das Messer 14 auch schräg zur Längsachse 18 angeordnet sein kann. Ferner kann das Messer auch als V-Messer ausgebildet sein, das aus zwei Einzelmessern zusammengesetzt ist.

Dem Messer 14 ist eine Führungsfläche 20 zugeordnet, die gegenüber dem Messer 14 versetzt angeordnet ist. In Richtung der Längsachse 18 ist auf der anderen Seite des Messers 14 eine Auslauffläche 22 vorgesehen, die bündig mit der Oberseite des Messers 14 ausgerichtet ist.

Die Auslauffläche 22 ist als Oberseite eines Querträgers 23 des Grundkörpers 12 ausgebildet.

Die Führungsfläche 20 ist als Oberseite eines austauschbaren Einsatzes 24 ausgebildet. Der Einsatz 24 ist im eingesetzten Zustand zwischen zwei Längsstegen 28 des Grundkörpers 12 aufgenommen, die sich von dem Querträger 23 parallel zur Längsachse 18 erstrecken.

Der Einsatz 24 befindet sich dabei zwischen zwei gegenüberliegenden Innenseiten 29 der Längsstege 28.

Der Einsatz 24 ist im eingesetzten Zustand mittels einer Parallelführung in Richtung senkrecht zur Längsachse 18 beweglich gelagert, wie es schematisch bei 32 angedeutet ist.

Durch den parallelen Versatz des Einsatzes 24 relativ zu dem Grundkörper 12, und folglich relativ zu dem Messer 14, kann die Schnittstärke des Küchengerätes 10 eingestellt werden.

Der Einsatz 24 ist durch schematisch angedeutete Klemmittel 34 in einer beliebigen Parallelversatzposition festlegbar, so daß eine stufenlose Einstellbarkeit der Schnittstärke erzielt wird.

Es versteht sich, daß die Darstellung des Küchengerätes 10 in Fig. 1 schematisch ist. Die Flächen 22, 20 können sowohl glatt als auch strukturiert sein. Ferner ist es möglich, daß die Längsstege 28 an ihren frei auskragenden Enden zur Versteifung miteinander verbunden sind. Auch können die Längsstege 28 gegenüber der Auslauffläche 22 erhöht sein, um zu ermöglichen, daß ein Fruchthalter oder dgl. darüber gleiten kann, ohne daß Messer 14 zu beschädigen.

Bei Verwendung des Küchengerätes 10 wird ein Schneidgut wie Obst, Gemüse, z.B. eine Gurke, in einer Führungsrichtung 36 etwa parallel zur Längsachse 18 hin- und herbewegt. Beim Bewegen des Schneidgutes von der Führungsfläche 20 an dem Messer 14 vorbei in Richtung zur Auslauffläche 22 wird eine Scheibe von dem Schneidgut abgeschnitten. Die abgeschnittene Scheibe fällt durch den Schlitz zwischen Messer 14 und Einsatz 24 nach unten, üblicherweise in einen darunterliegenden Behälter.

Bei einer anschließenden Rückbewegung nach vorne wird der Rest des Schneidgutes über das Messer 14 bewegt, ohne daß ein Schneidvorgang erfolgt. Bei der nächsten Bewegung in Führungsrichtung wird wiederum eine Scheibe abgeschnitten.

Es versteht sich, daß das Messer 14 nicht notwendigerweise gerade ausgebildet sein muß. Das Messer 14 kann bspw. auch geriffelt oder gewellt sein.

Zum Verändern der Schnittstärke werden die Klemmittel 34 gelöst, und der Einsatz 24 wird, ohne ihn von dem Grundkörper 12 abzunehmen, mit der Parallelführung 32 parallel zur Messerebene versetzt. Sobald die richtige Schnittstärke eingestellt ist, werden die Klemmittel 34 wieder betätigt, um den Einsatz 24 an den Grundkörper 12 festzulegen.

In Fig. 2 ist eine zweite Ausführungsform eines Küchengerätes generell mit 40 bezeichnet.

Das Küchengerät 40 ist generell ähnlich aufgebaut wie das Küchengerät 10 der Fig. 1. Gleiche Teile sind daher mit denselben Bezugsziffern versehen. Im folgenden werden lediglich die Unterschiede erläutert.

Das Küchengerät 40 weist einen Grundkörper 42 auf. Der Grundkörper 42 besitzt einen Querträger 46, auf dessen Oberseite die Führungsfläche 20 ausgebildet ist, und zwei sich nach hinten von dem Querträger 46 aus erstreckende Längsstege 44.

An dem Querträger 46 ist ferner ein schematisch angedeuteter Griff 47 angeformt.

Zwischen den Querträgern 46 ist ein Einsatz 48 gelagert, der an seiner Oberseite die Auslauffläche 22 bildet. Ferner ist an einer nach vorne weisenden Kante des Einsatzes 48 das Messer 14 vorgesehen.

Der Einsatz 48 mit dem daran befindlichen Messer 14 ist durch eine schematisch angedeutete Parallelführung 50 relativ zu dem Grundkörper 42 etwa parallel zu der Führungsfläche 20 versetzbar ausgebildet.

Zum Festlegen des Einsatzes 48 an dem Grundkörper 42 dienen wiederum Klemmittel 34.

Die Handhabung und Funktionsweise des Küchengerätes 40 ist identisch wie bei dem Küchengerät 10. Zum Verändern der Schnittstärke wird nunmehr lediglich die Position des Einsatzes 48 verändert, anstelle des Einsatzes 24.

Eine dritte Ausführungsform eines erfindungsgemäßen Küchengerätes ist in Fig. 3 generell mit 60 bezeichnet.

Der Aufbau des Küchengerätes 60 ist generell ähnlich zu dem des Küchengerätes 10. Gleiche Teile sind mit gleichen Bezugsziffern versehen. Im folgenden werden lediglich die Unterschiede erläutert.

Anstelle des Einsatzes 24 ist bei dem Küchengerät 60 ein Einsatz 62 vorgesehen, der mittels einer schematisch angedeuteten Schwenkführung 66 um eine Schwenkachse 64 verschwenkbar ausgebildet ist.

Die Schwenkachse 64 verläuft etwa parallel zu dem Messer 14 und ist im Endbereich der Enden der Längsstege 28 vorgesehen.

Zur Stabilisierung sind die Enden der Längsstege 28 miteinander verbunden über ein Element 68, das gleichzeitig als Griff dienen kann.

Zum Verstellen der Schnitthöhe werden die schematisch angedeuteten Klemmittel 34 gelöst. Anschließend wird der an dem Grundkörper 12 gelagerte Einsatz 62 um die Schwenkachse 64 verschwenkt, bis ein geeigneter Versatz zwischen dem Messer 14 und dem zugeordneten Abschnitt des Einsatzes 62 erzielt ist.

Anschließend werden die Klemmittel 34 wieder betätigt, um den Einsatz 62 in der so eingestellten Schwenkposition festzulegen.

Zum Schneiden von Schneidgut wird das Küchengerät 60 genauso verwendet wie das Küchengerät 10. Es ist lediglich so, daß das Schneidgut meist nicht parallel auf das Messer 14 aufläuft, sondern in der Regel unter einem kleinen Winkel hierzu, der typischerweise im Bereich zwischen 1° und 10° liegt.

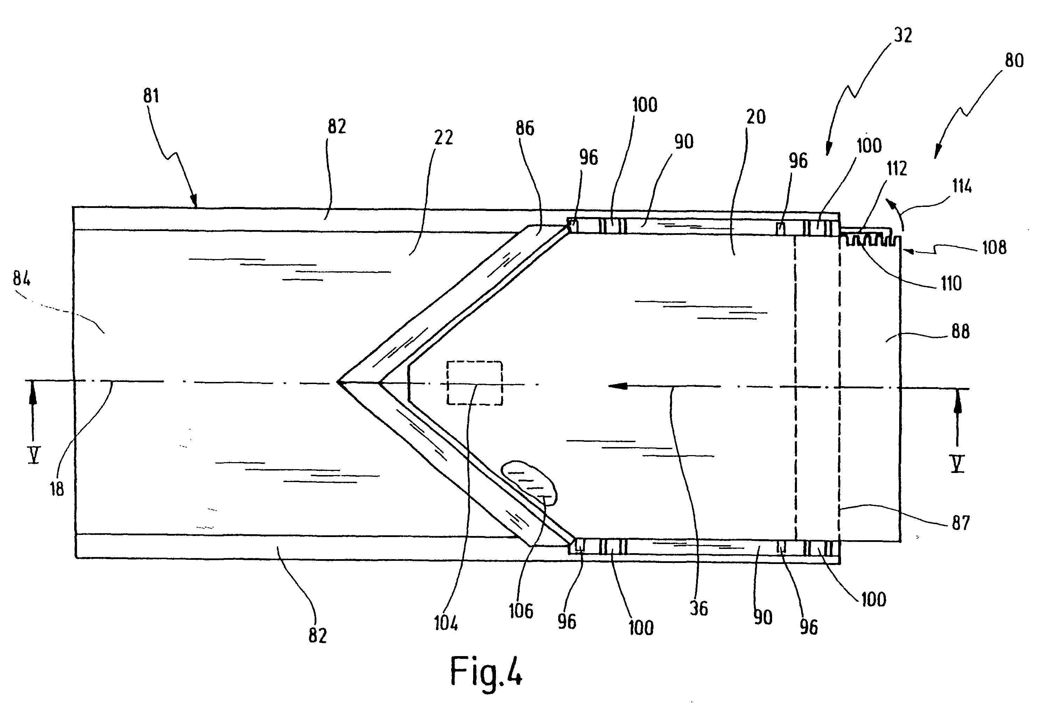

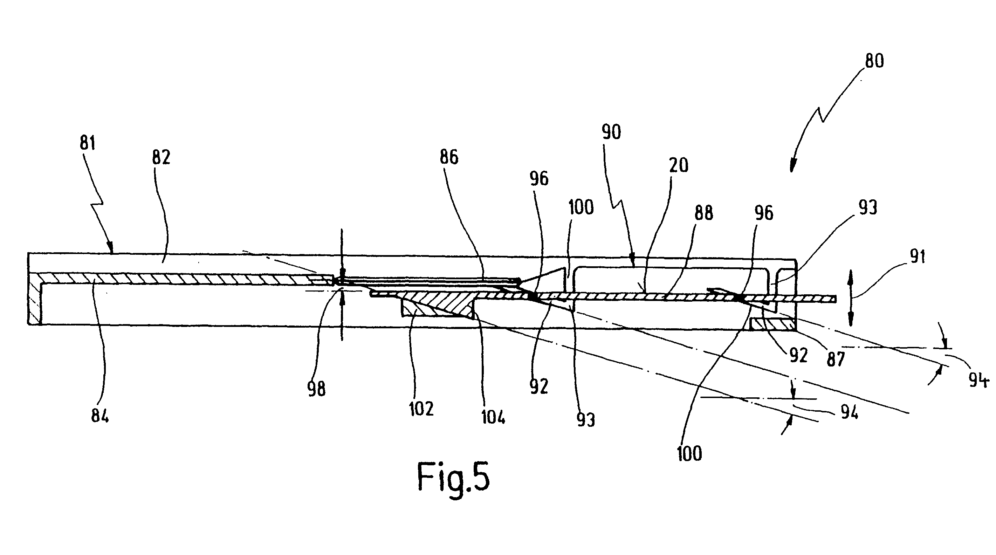

Eine bevorzugte Ausführungsform eines erfindungsgemäßen Küchengerätes ist in den Fig. 4 und 5 generell mit 80 bezeichnet.

Das Küchengerät 80 entspricht in seinem grundlegenden Aufbau dem Küchengerät 10 der Fig. 1. Gleiche Teile sind folglich mit denselben Bezugsziffern gekennzeichnet. Es werden lediglich die Unterschiede zu dem Küchengerät 10 erläutert.

Das Küchengerät 80 weist einen Grundkörper 81 auf, der zwei Längsstege 82 und einen die beiden Längsstege 82 verbindenden Querträger 84 hat.

Der Querträger 84 bildet an seiner Oberfläche die Auslauffläche 22. An einer zur Führungsfläche 20 hin gewandten Kante ist an dem Querträger 84 ein V-förmiges Messer 86 angeformt.

Das V-förmige Messer (im folgenden V-Messer) weist zwei Messerhälften auf, die sich jeweils von einem der Querträger 84 unter einem Winkel von ca. 10° bis 70°, insbesondere etwa 15° bis 30° in bezug auf die Längsachse 18 bis hin zu dieser erstrecken. Die Messerhälften schließen folglich einen Winkel im Bereich zwischen 30° und 100° ein, vorzugsweise zwischen 30° und 60°.

Die Längsstege 82 überragen die Auslauffläche 22 um eine gewisse Höhe, wie es insbesondere in Fig. 5 zu sehen ist. Hierdurch ist es möglich, daß ein - an sich bekannter - Fruchthalter auf der Oberseite der Längsstege 82 geführt werden kann, ohne das V-Messer 86 zu beschädigen.

Die Längsstege 82 erstrecken sich ausgehend von dem Querträger 84 nach vorne (also entgegen der Führungsrichtung) und sind im Bereich ihrer Enden durch einen weiteren Querträger 87 miteinander verbunden.

In die so gebildete Öffnung ist ein Einsatz 88 einsetzbar, dessen Oberseite als Führungsfläche 20 dient.

Der Einsatz 88 ist generell plattenförmig ausgestaltet und ist an seiner Vorderseite, also zum V-Messer 86 hin, ebenfalls etwa V-förmig ausgestaltet. Die Spitze des Einsatzes 88 kann abgeflacht sein.

Im eingesetzten Zustand ist der Einsatz 88 mittels zweier an den gegenüberliegenden Längsstegen 82 vorgesehener Parallelführungen 90 etwa parallel zur Auslauffläche 22 (bzw. zum V-Messer 86) verschieblich gelagert.

Der hierdurch erzielte Parallelversatz ist in Fig. 5 durch einen schematisch angedeuteten Pfeil 91 gekennzeichnet.

Die Parallelführungen 90 weisen jeweils zwei in Längsrichtung voneinander beabstandete Führungsnuten 100 auf. Jede der Führungsnuten 100 weist einen etwa senkrecht verlaufenden Einführungsnutabschnitt 93 und einen Rampennutabschnitt 92 auf. Der Rampennutabschnitt 92 schließt an ein unteres Ende des Einführungsnutabschnittes 93 an und bildet mit der Führungsfläche 20 einen Winkel 94 im Bereich von 10° bis 50°, vorzugsweise im Bereich zwischen 15° und 30°.

Der Einsatz 88 ist an seinen Seitenkanten jeweils mit zwei in Längsrichtung voneinander beabstandeten Führungsstiften 96 versehen, deren Außendurchmesser an die Breite der Führungsnuten 100 angepaßt ist.

Zum Einsetzen des Einsatzes 88 in den Grundkörper 81 werden die Führungsstifte 96 von oben in die nach oben offenen Führungsnuten 100 eingeführt und bis zum Boden des Einführungsnutabschnittes 93 abgesenkt.

In diesem Zustand hat der Einsatz 88 in bezug auf das Messer 86 den größten Versatz.

Ausgehend von diesem Zustand läßt sich der Einsatz 88 parallel versetzen, indem die Führungsstifte 96 entlang der jeweiligen Rampennutabschnitte 92 verschoben werden.

Aufgrund der Rampennutabschnitte 93 führt ein Verschieben des Einsatzes in Richtung der Längsachse 18 bzw. in Führungsrichtung 36 zwangsweise zu einem Versatz in der Richtung senkrecht hierzu, nämlich nach oben in Fig. 5.

Hierdurch wird der Versatz zwischen Einsatz 88 und Messer 86 und folglich die Schnittstärke verringert.

Während der Benutzung des Küchengerätes wird auf den Einsatz 88 eine erhebliche Kraft von oben ausgeübt.

Um zu verhindern, daß der Einsatz 88 in Querrichtung durchgebogen wird, ist der Grundkörper 81 unterhalb der V-Fläche des V-Messers 86 mit einer weiteren Querstütze 102 versehen, die die Längsstege 82 verbindet. Die Querstütze 102 ist zumindest in einem mittleren Abschnitt mit einer rampenartigen Oberfläche versehen und dient folglich als Zentralrampe 102.

An der Unterseite des Einsatzes 88 ist ein entsprechender Auflagekeil 104 vorgesehen, der auf der Zentralrampe 102 gleitet.

Es versteht sich, daß die Zentralrampe 102 optional vorgesehen ist, um bei relativ dünnen Einsätzen 88 eine Durchbiegung in Querrichtung zu verhindern. Um eine stabile Parallelverschieblichkeit zu erzielen, würde es alternativ auch hinreichen, wenn die Zentralrampe 102 vorgesehen ist, und nur zwei gegenüberliegende Führungsnuten 100 (nicht vier, wie in der dargestellten Ausführungsform). In diesem alternativen, nicht dargestellten Fall wäre folglich eine 3-Punkt-Auflage erzielt, die bekanntlich zur stabilen Abstützung hinreichend ist.

In Fig. 4 ist ferner bei 106 eine Reihe von in Querrichtung versetzt an dem Einsatz 88 vorgesehenen senkrechten Messern gezeigt. Es versteht sich, daß eine solche Messerreihe 106 optional ist und bei manchen Einsätzen 88 vorhanden sein kann, bei anderen jedoch nicht.

Bei 108 sind in Fig. 4 Feststellmittel gezeigt.

Obgleich die Feststellung des Einsatzes 88 in einer bestimmten Position relativ zu dem Messer 86 durch Klemmittel lösbar ist, wie sie schematisch beispielsweise in Fig. 1 angedeutet sind, sind im vorliegenden Fall rastende Feststellmittel 108 vorgesehen.

Die Feststellmittel 108 umfassen an einem hinteren seitlichen Abschnitt des Einsatzes 88 eine Mehrzahl von in Längsrichtung voneinander beabstandeten Nuten 110, sowie einen elastisch auslenkbar an einem der Längsstege 82 vorgesehenen Riegel 112.

Im entspannten Zustand greift der Riegel 112 in eine der Nuten 110 und legt folglich die Längsposition des Einsatzes 88 in bezug auf den Grundkörper 81, und folglich die Schnittstärke fest, die in Fig. 5 schematisch bei 98 dargestellt ist.

Zum Verstellen der Schnitthöhe wird der Riegel 112 seitlich nach außen abgelenkt, wie es in Fig. 4 schematisch bei 114 gezeigt ist. Folglich gibt der Riegel den Einsatz 88 frei, so daß dieser sich in Längsrichtung frei verschieben kann. Sobald die geeignete Schnittstärke eingestellt ist, läßt man den Riegel 112 wieder los, so daß dieser in eine der Nuten 110 schnappt und der Einsatz 88 an dem Grundkörper 81 festgelegt ist.

Eine rastende Feststellung ist nur möglich, wenn sich die Führungsstifte 96 in den Rampennutabschnitten 92 befinden.

Aufgrund der Tatsache, daß die Rampennutabschnitte 92 die Führungsstifte 96 nach oben wie nach unten eingrenzen, wird selbst bei diesen einfachen Feststellmitteln 108 immer eine definierte Lage des Einsatzes 88 in bezug auf den Grundkörper 81 erzielt.

Es versteht sich, daß die Winkel 94 der Rampennutabschnitte 92 und jener der Zentralrampe 102 vorzugsweise gleich groß sind.

Auch ist es bevorzugt, wie dargestellt, daß der Einsatz 88 parallel zu dem Messer 86 und zu der Auslauffläche 22 versetzt wird. Generell ist es jedoch auch denkbar, den Einsatz 88 generell leicht geneigt in bezug auf das Messer 86 bzw. die Auslauffläche 22 anzuordnen und ausgehend von einer solchen geneigten Position parallel zu versetzen.

Die Darstellung des Küchengerätes 80 in den Figuren 4 und 5 ist generell schematisch. Es versteht sich, daß zur ergonomischen Handhabung entsprechend ausgeformte Griffe vorhanden sein können. Ferner versteht sich, daß in den Figuren winklig dargestellte Kanten in der Praxis abgerundet sein können, um das Küchengerät 80 weitgehend im Spritzgußverfahren aus Kunststoff herstellen zu können.

So bestehen der Grundkörper 81 und/oder der Einsatz 88 vorzugsweise aus Kunststoff, das V-Messer 86 aus geeignetem, vorzugsweise rostfreiem Stahl.

Falls anstelle der rastenden Feststellmittel 108 Klemmittel vorgesehen werden, läßt sich auch eine stufenlose Verstellung der Schnittstärke 98 realisieren.

Ferner versteht sich, daß anstelle der Rampen 92 und 102 auch anderer Parallelführungen vorgesehen sein können, beispielsweise Parallelogrammgelenkführungen.

Auch ist es in einer alternativen, nicht dargestellten Ausführungsform möglich, die Führungsnuten 100 in der Draufsicht beispielsweise U-förmig zu gestalten, so daß ein Parallelversatz generell nicht schräg, sondern senkrecht zur Längsachse 18 erfolgt. In einem solchen Fall sind verständlicherweise andere Feststellmittel vorzusehen, vorzugsweise Klemmittel.

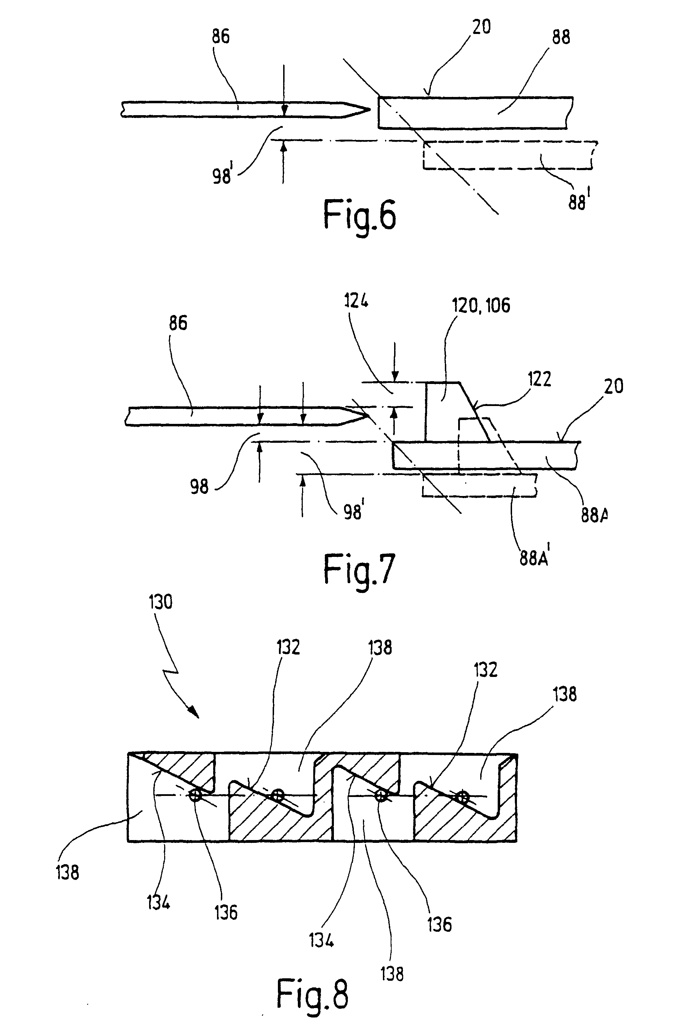

In einer bevorzugten Ausgestaltung, wie sie in Fig. 6 gezeigt ist, läßt sich der Einsatz 88 soweit nach oben verschieben, daß seine Oberseite, also die Führungsfläche 20, oberhalb der Schneide des Messers 86 liegt. Eine solche Stellung, die in Fig. 6 mit durchgezogenen Linien gezeigt ist, ist eine Stellung, in der das Küchengerät 80 abgelegt oder gelagert werden kann. Dabei ist die scharfe Schneide des Messers 86 geschützt. Die Ausführungsform dient folglich als Kinderschutz.

Eine Betriebsposition zum Schneiden von Schneidgut mit einer bestimmten Schnittstärke 98' ist in Fig. 6 in gestrichelten Linien dargestellt.

Anstelle des in den Figuren 4 und 5 gezeigten Einsatzes 88, der eine glatte bzw. ebene Führungsfläche 22 aufweist (die auch strukturiert sein kann), weist ein alternativer austauschbarer Einsatz 88A gemäß Fig. 7 eine Mehrzahl von senkrechten, in Querrichtung beabstandeten Einzelmessern 120 auf. Die Messer 120 sind etwa so angeordnet, wie es in Fig. 4 bei 106 dargestellt ist.

Die Messer 120 stehen gegenüber der Führungsfläche 20 um einen Wert vor, der zwei alternative Betriebsweisen ermöglicht.

In der in Fig. 7 mit durchgezogenen Linien gezeigten Position des Einsatzes 88A steht die Oberseite der Messer 120 gegenüber dem Messer 86 um einen Wert vor, der in Fig. 7 generell bei 124 gezeigt ist.

Der Wert 124 ist größer als die in dieser Position erzielte Schnittstärke 98.

Bei Benutzung des Küchengerätes 80 mit dem Einsatz 88A in dieser Position wird bei einem ersten Schneidvorgang eine Reihe von Streifen mittels der Schneidkanten 122 der Messer 120 erzeugt und anschließend mit der Schnittstärke 98 abgeschnitten. Aufgrund des Überstandes 124 wird der nicht abgeschnittene Teil des Schneidgutes ebenfalls in Längsrichtung eingeschnitten. Wenn man das Schneidgut vor dem nächsten Schneidvorgang um 90° dreht, werden die gewissermaßen eingeschnittenen Streifen des Schneidgutes dann von den Schneidmessern 120 quergeschnitten und schließlich mittels des Messers 86 als Würfel abgeschnitten. Vor dem nächsten Schneidvorgang ist das Schneidgut wiederum um 90° zu drehen, usw.

Folglich lassen sich in der gezeigten Position Würfel bzw. Quader herstellen (Würfel nur dann, wenn der Abstand der Messer 120 der Schnittstärke 98 entspricht).

In einer zweiten Position des Einsatzes 88A, die in Fig. 7 gestrichelt dargestellt ist, befindet sich die Oberseite der Messer 120 etwa auf Höhe der Schneide des Messers 86. Folglich werden bei jedem Schneidvorgang Streifen von dem Schneidgut abgeschnitten. Die Unterseite des Schneidgutes wird nicht eingeschnitten.

Es versteht sich, daß weitere Einsätze 88B, etc. mit dem Grundkörper 81 kombiniert werden können, die beispielsweise einzelne Messer 120 mit geringerer Höhe und/oder anderem Abstand aufweisen, um Streifen und/oder Würfel unterschiedlicher Abmessungen herstellen zu können.

Der Gedanke jedoch, daß man den austauschbaren Einsatz 88A in eine Position bringen kann, bei der an dem Einsatz 88A angebrachte senkrechte Messer gegenüber dem "Hauptmesser" 86 vorstehen, um folglich Würfel bzw. Quader schneiden zu können, wird unabhängig von der Beweglichkeit des Einsatzes im eingesetzten Zustand im Ganzen als eigene Erfindung angesehen.

Eine weitere alternative Ausführungsform ist schematisch in Fig. 8 gezeigt.

In der alternativen Ausführungsform ist anstelle der Parallelführungen 90 jeweils eine Parallelführung 130 vorgesehen, die anstelle von Führungsnuten 100 mit durchgehend etwa konstanter Breite die folgende Form aufweist.

Die Oberfläche der Parallelführungen 130 ist so konturiert, daß zwei in axialer Richtung beabstandete Auflagerampen 132 vorgesehen sind und zwei verschachtelt hierzu angeordnete, axial versetzte Halterampen 134.

Anstelle von zwei axial versetzten Führungsstiften 96 sind bei dieser Ausführungsform an einem Einsatz 88 (nicht gezeigt) vier axial versetzte Führungsstifte 136 vorgesehen.

Zwei der Führungsstifte liegen auf den Auflagerampen 132 auf, zwei andere Führungsstifte 136 liegen an der Unterseite der Halterampen 134 an.

Auch bei dieser Ausführungsform ist gewährleistet, daß sich ein solcher Einsatz mit Führungsstiften 136 bei einer Axialbewegung zwangsweise nach oben bzw. unten bewegt, also immer eine definierte Lage zwischen Grundkörper und Einsatz erzielt wird.

Im Unterschied zu der Parallelführung 90 mit den relativ schmalen Führungsnuten 100 sind bei der Parallelführung 130 großflächige Vertiefungen 138 ausgebildet, die wesentlich leichter zu reinigen sind. Ferner kann sich in den großflächigen Vertiefungen 138 Schmutz schlechter ansammeln.

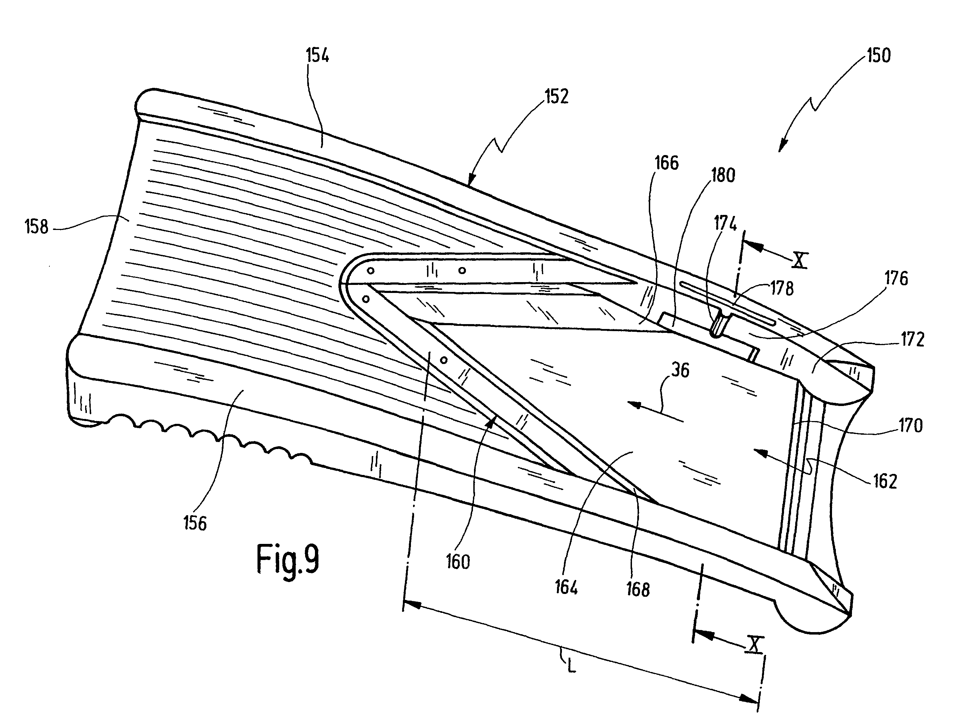

Eine fünfte Ausführungsform eines erfindungsgemäßen Küchengerätes ist in den Figuren 9 bis 14 generell mit 150 bezeichnet.

Das Küchengerät 150 entspricht in seiner generellen Funktionsweise den bereits erörterten Küchengeräten.

Das Küchengerät 150 weist einen Grundkörper 152 auf, der in den Figuren 9 bis 11 dargestellt ist.

Der Grundkörper 152 beinhaltet zwei etwa parallel verlaufende Längsstege 154, 156, zwischen denen eine Auslauffläche 158 ausgebildet ist.

Die Auslauffläche 158 ist an ihrer Vorderkante mit einem V-Messer 160 versehen. Insoweit entspricht dieser Aufbau dem Aufbau des bekannten V-Hobels der vorliegenden Anmelderin.

Der Grundkörper 152 weist ferner eine Aufnahme 162 für einen auswechselbaren Einsatz auf.

Die Aufnahme 162 weist eine sich zwischen den zwei Längsstegen 154, 156 erstreckende Auflageplatte 164 auf.

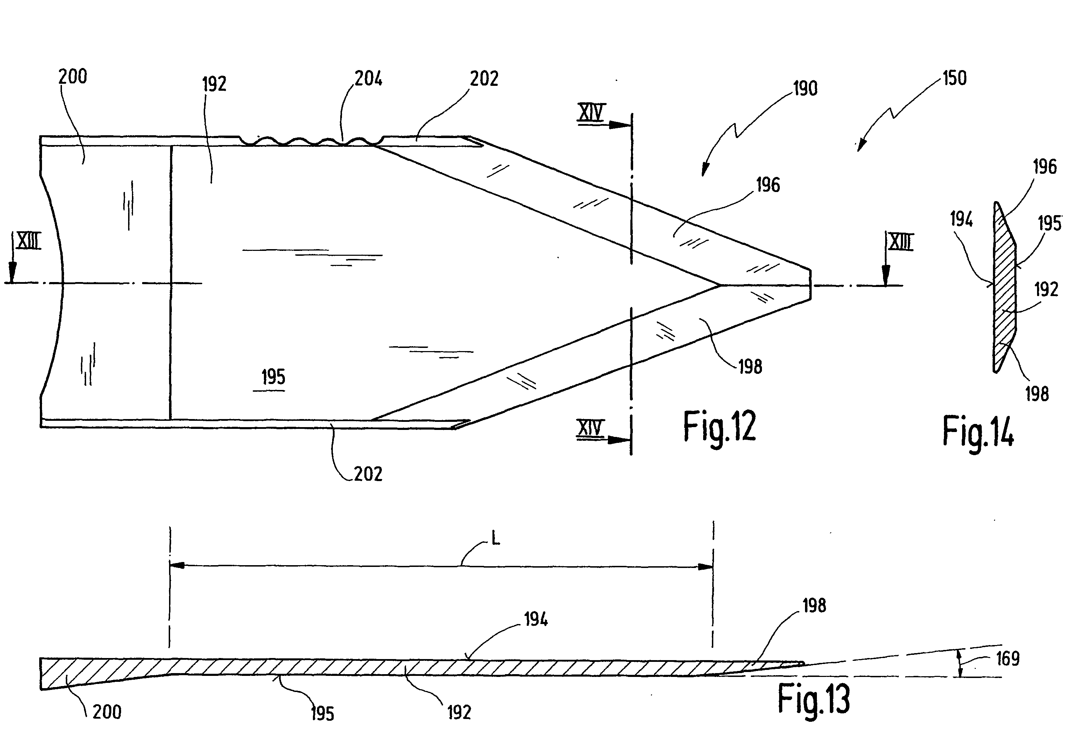

Die Auflageplatte 164 ist gegenüber der Auslauffläche 158 im wesentlichen parallel versetzt. Die Auflageplatte 164 weist zwei Rampen 166, 168 auf, die entsprechend dem V-Messer 160 in einer V-Anordnung zueinander ausgerichtet sind. Die Rampen 164, 168 steigen jeweils gegenüber der Auflageplatte 164 unter einem Winkel 169 (Fig. 13) von etwa 8° an.

An ihrem vorderen Ende weist die Auflageplatte 164 eine Querkante 170 auf, an die sich ein nach unten abfallender Griffabschnitt anschließt.

Die Aufnahme 162 ist seitlich durch die Längsstege 154, 156 eingegrenzt. Eine Seitenwand 172 des Längssteges 154 weist zu der Aufnahme 162 hin.

Im Bereich der Seitenwand 172 ist eine Rasteinrichtung 173 vorgesehen, um einen Einsatz rastend festzulegen. Die Rasteinrichtung 173 weist eine sich senkrecht zur Führungsrichtung 36 erstreckende Rastnase 174 auf. Die Rastnase 174 ist an einem elastischen Steg 176 der Seitenwand 182 ausgebildet. Hierdurch ist es möglich, daß die Rastnase 174 seitlich ausweicht, wenn der Einsatz eingeschoben wird.

Alternativ zu einer seitlichen Rasteinrichtung 173 ist es auch denkbar, die Rasteinrichtung in die Auflageplatte 164 zu integrieren.

Der elastische Steg 176 ist gebildet durch ein Langloch 187 in einem oberen Bereich des Längssteges 154, sowie durch ein sich parallel hierzu erstreckendes Langloch 180 in der Seitenwand 172. Der elastische Steg 176 ist zwischen diesen zwei Langlöchern 178, 180 ausgebildet.

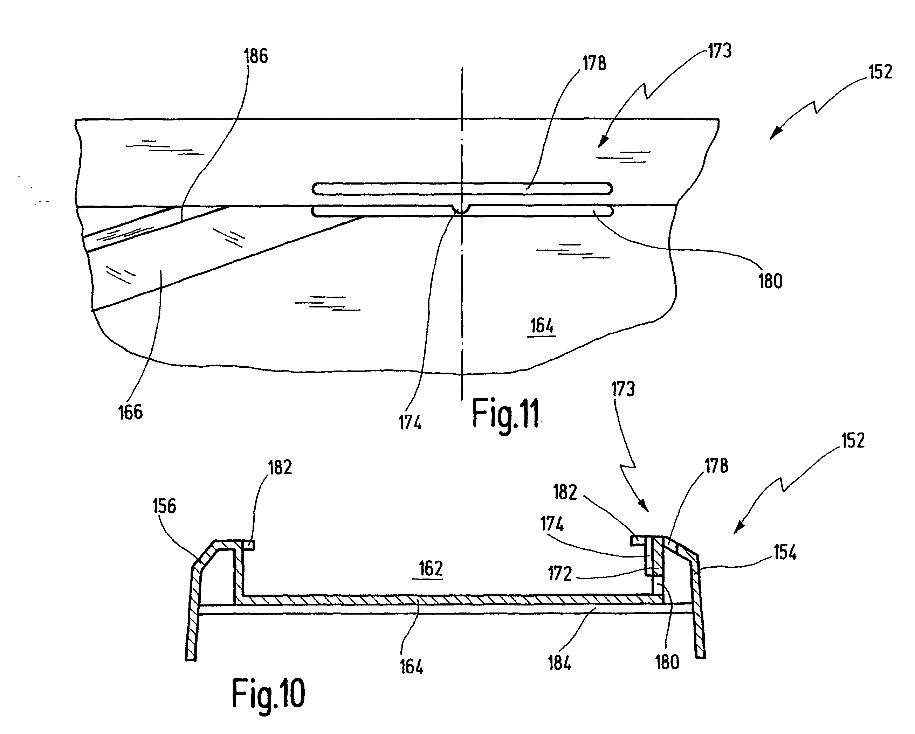

Wie es in Fig. 10 schematisch zu erkennen ist, ist unterhalb der Auflageplatte 164 wenigstens ein Quersteg 184 vorgesehen, der zwischen den Längsstegen 154, 156 angeordnet ist. Die Auflageplatte 164 läuft entsprechend der Form des V-Messers 160 V-förmig zu. Der hierdurch gebildete, zum V-Messer 160 hin weisende kragarmige Abschnitt wird durch den wenigstens einen Quersteg 184 von unten her abgestützt.

Hierdurch wird erreicht, daß der V-förmig zulaufende Abschnitt der Auflageplatte 164 nicht nach unten wegfedert, wenn von oben ein Druck mittels des Schneidgutes ausgeübt wird.

Wie es in den Figuren 9 und 11 zu erkennen ist, schließt sich an die Rampen 166, 168 eine Auslauflippe 186 an. Die Auslauflippe 186 ist im wesentlichen parallel zur Auflageplatte 164 und zum V-Messer 160 ausgerichtet. Die Auslauflippe 186 dient in einer untersten Stellung des Einsatzes (was nachstehend noch erläutert wird) als Teil der Führungsfläche für das Schneidgut.

Ein Einsatz zum Einsetzen in die Aufnahme 162 des Grundkörpers 152 ist in den Figuren 12 bis 14 generell bei 190 gezeigt.

Der Einsatz 190 ist in Fig. 12 in einer Ansicht von unten dargestellt.

Der Einsatz 190 weist eine Grundplatte 192 auf, die einen im wesentlichen rechteckigen Abschnitt und einen V-förmig zulaufenden Abschnitt besitzt.

Die Oberseite des Einsatzes 190 ist als Führungsfläche 194 im wesentlichen plan ausgebildet. Der Einsatz 190 ist dabei in der Aufnahme 162 generell so angeordnet, daß die Führungsfläche 194 parallel zur Ebene des V-Messers verläuft, und zwar für alle Schnittstärken 98.

Die Unterseite 195 der Grundplatte 192 ist an die Ausgestaltung der Aufnahme 162 angepaßt.

In dem hinteren V-förmig zulaufenden Abschnitt weist die Grundplatte 192 an ihrer Unterseite 195 zwei Keilflächen 196, 198 auf. Die Keilflächen 196, 187 sind in bezug auf Anordnung, Größe und Winkel an die Rampen 166, 168 der Aufnahme 162 angepaßt.

An dem vorderen Ende (linkes Ende in Fig. 12) weist die Grundplatte 192 einen sich nach vorne verdickenden Keilabschnitt 200 auf. Die Steigung des Keilabschnittes entspricht dem Winkel 169.

Wie es in Fig. 13 zu erkennen ist, ist die Unterseite 195 der Grundplatte 192 über eine Länge L parallel zur Führungsfläche 194 ausgebildet. Die Länge L ist entsprechend in Fig. 9 eingezeichnet.

Man erkennt, daß die Aufnahme 162 und die Unterseite 195 der Grundplatte 192 so aneinander angepaßt sind, daß der Einsatz 190 in einer ersten Stellung (mit der größten Schnittstärke) flach auf der Auflageplatte 164 aufliegt. Dabei liegt die Führungsfläche 164 etwa auf Höhe der Auslauflippe 186. Der Keilabschnitt 200 steht gegenüber der Querkante 170 der Auflageplatte 164 nach vorne vor.

Zwei gegenüberliegende Längskanten 202 des Einsatzes 190 liegen parallel zu den Seitenwänden 172 der Aufnahme 162.

An einer Längskante 202 ist eine Mehrzahl von in Längsrichtung aufeinanderfolgenden Rastvertiefungen 204 vorgesehen.

Die Rastvertiefungen 204 sind an die Rastnase 174 der Rasteinrichtung 173 angepaßt.

In Fig. 10 sind ferner zwei von den Seitenwänden 172 nach innen vorstehende Haltenasen 182 gezeigt. Die Haltenasen 182 dienen zur Längsführung des in die Aufnahme 162 einzuführenden Einsatzes. Sie verhindern, daß der Einsatz 190 nach oben aus der Aufnahme 162 herausgehoben werden kann.

Der Einsatz 190 wird in die Aufnahme 162 von vorne nach hinten (in Fig. 9 von rechts nach links) eingeschoben. Dabei drückt die Seitenkante 202 die Rastnase 174 seitlich elastisch weg, bis die Rastnase 174 in die erste der Rastvertiefungen 204 einrastet. In diesem Zustand liegt, wie oben erwähnt, die Führungsfläche 194 etwa auf Höhe der Auslauflippe 186. Es ist die größte Schnittstärke eingestellt. Durch weiteres Verschieben des Einsatzes 190 nach hinten erfolgt ein Parallelversatz des Einsatzes 190 in bezug auf die Auflageplatte 164 (und folglich parallel zu der Messeebene).

Denn bei dem weiteren Verschieben des Einsatzes 190 innerhalb der Aufnahme 162 nach hinten gleiten zum einen die Keilflächen 196, 198 an den Rampen 166, 168 nach oben. Zum anderen wird der vordere Teil des Einsatzes 190 in gleichem Maße angehoben, indem der Keilabschnitt 200 über die Querkante 170 geführt wird.

Wie es in Fig. 12 gezeigt ist, weist der Einsatz 190 beispielsweise fünf Rastvertiefungen 204 auf. Vier dieser Vertiefungen werden für unterschiedliche Höheneinstellungen der Führungsfläche 194 und folglich verschiedene Schnittstärken genutzt.

Sobald die Rastnase 174 in die letzte der Rastvertiefungen 204 eingerastet ist, liegt die Führungsfläche 194 etwa auf der Höhe des V-Messers 160 oder etwas darüber, so daß es weitgehend ausgeschlossen ist, daß man sich versehentlich an dem V-Messer schneidet. Diese letzte Stellung entspricht folglich einer Aufbewahrungs- oder Sicherungsstellung, entsprechend Fig. 6.

Man erkennt, daß bei dieser Ausführungsform die Rampen bzw. Keilflächen als flächige Rampen ausgebildet sind, die sich unmittelbar an andere Flächen der fraglichen Körper (Grundkörper 152 bzw. Einsatz 190) anschließen. Insgesamt ist so ein Küchengerät 150 realisiert, bei dem die Einstellbarkeit der Höhe in einer Mehrzahl von Stufen (mehr als zwei) auf einfache Weise vollzogen werden kann. Die Handhabung ergibt sich auch für den ungeübten Anwender vollkommen zwanglos.

Ferner ist durch die insgesamt glattflächige Ausgestaltung sowohl des Grundkörpers 152 als auch des Einsatzes 190 gewährleistet, daß das Küchengerät insgesamt leicht zu reinigen ist. Schneidgutreste können sich nicht in kleinen Nuten oder sonstigen Vertiefungen festsetzen.

Bei dem Küchengerät 150 ist die Aufnahme 162 einstückig mit dem Grundkörper 162 ausgebildet. Das Küchengerät 150 besteht folglich im einfachsten Fall aus lediglich zwei Teilen. Es versteht sich jedoch, daß anstelle des Einsatzes 190 beispielsweise auch Einsätze mit Quermessern verwendbar sind, wie sie schematisch in Fig. 7 angedeutet sind.

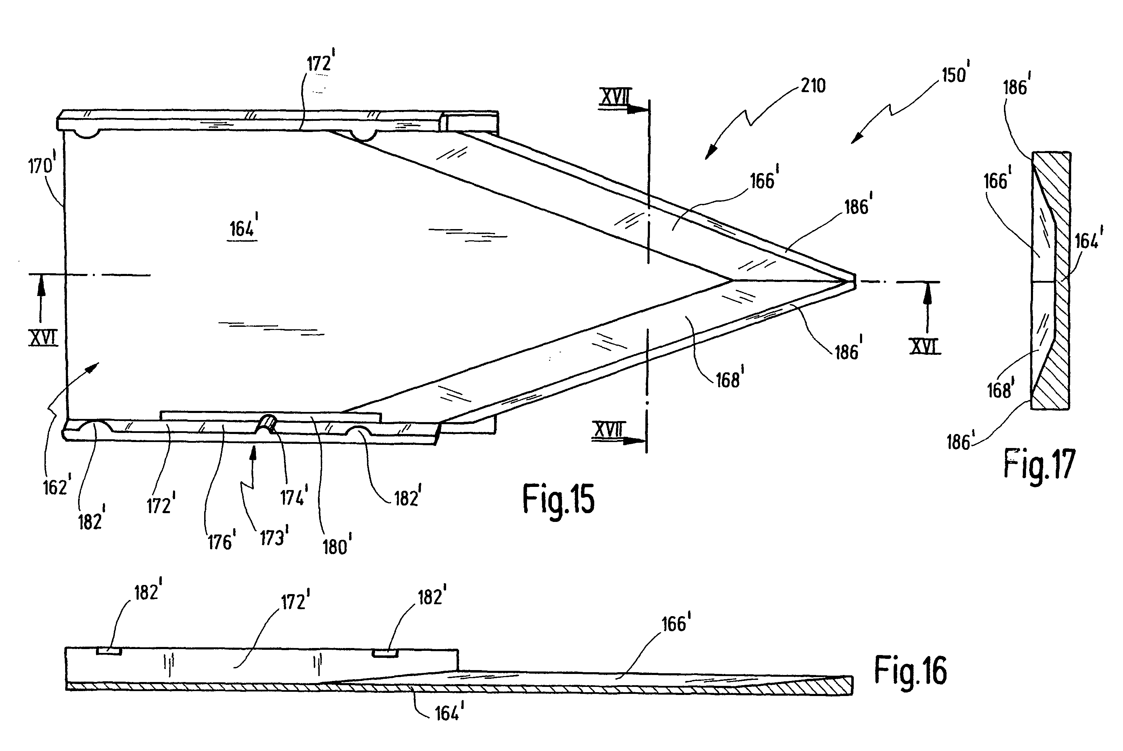

In den Figuren 15 bis 18 ist eine sechste Ausführungsform eines erfindungsgemäßen Küchengerätes generell mit 150' bezeichnet.

Das Küchengerät 150' entspricht in nahezu allen Aspekten dem Küchengerät 150 der Figuren 9 bis 14.

Bei dem Küchengerät 150' werden dieselben Einsätze 190 verwendet wie bei dem Küchengerät 150. Das Küchengerät 150' unterscheidet sich von dem Küchengerät 150 dadurch, daß der Grundkörper 152' nicht unmittelbar zur Aufnahme des Einsatzes 190 ausgelegt ist, sondern daß der Grundkörper 152' zur Aufnahme eines Adapters ausgelegt ist, der in den Figuren 15 bis 17 mit 210 bezeichnet ist.

Der Grundkörper 152' kann ein herkömmlicher Grundkörper eines V-Hobels des Standes der Technik sein. Bei dieser Art von Grundkörper ist es möglich, einen Einsatz jeweils von vorne nach hinten in eine bestimmte Betriebsposition einzusetzen. Zur Schnittstärkenverstellung können entweder unterschiedliche Einsätze eingeschoben werden, oder ein Einsatz kann in einem gewendeten Zustand eingeschoben werden.

Bei dem Küchengerät 152 wird anstelle eines derartigen bekannten Einsatzes der Adapter 210 in die bestimmte Betriebsposition eingesetzt. Anschließend läßt sich die Kombination aus Grundkörper 152 und Adapter 210 genauso handhaben wie der Grundkörper 152, der oben beschrieben wurde.

Zur Unterscheidung sind die entsprechenden Elemente des Adapters 210 bzw. des Grundkörpers 152' jeweils mit einem Apostrophzeichen versehen.

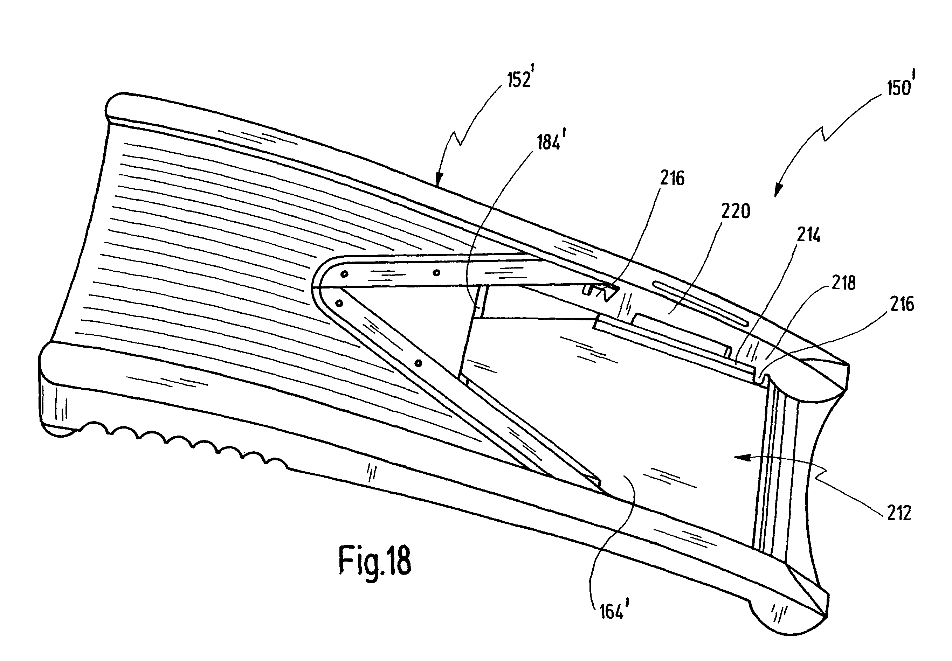

Zusätzlich ist in Fig. 18 bei 212 eine Aufnahme für den Adapter gezeigt. Die Aufnahme 212 weist jeweils seitlich im Bereich der Seitenflächen 172 Führungsschienen 214 auf. Ferner sind an den Seitenflächen 218 der Aufnahme 212 Rastvertiefungen 216 vorgesehen, die es ermöglichen, den Adapter 210 in der einen Betriebsposition rastend festzulegen.

In der einen Seitenfläche 218 ist ferner ein elastischer Steg 220 ausgebildet, durch zwei parallele Langlöcher, ähnlich den Langlöchern 178, 180 der Fig. 9. An dem elastischen Steg 220 ist jedoch keine nach innen vorstehende Nase vorgesehen.

Der Adapter 210 weist, wie es in Fig. 15 dargestellt ist, eine Auflageplatte 164' auf, die im wesentlichen rechteckförmig mit einem V-förmig zulaufenden Ende ausgebildet ist. An dem V-förmig zulaufenden Ende sind zwei Rampen 166', 168' ausgebildet, die in eine Auslauflippe 186' übergehen.

Im rechteckigen Bereich sind jeweils zwei Seitenwände 172' vorgesehen. An der einen Seitenwand 172' ist ein elastischer Steg 176' ausgebildet, an dessen Innenseite eine Rastnase 174' nach innen vorsteht. Der elastische Steg 176' ist gebildet durch ein Langloch im Übergangsbereich zwischen der Auflageplatte 164 und der einen Seitenwand 172'.

An einer Oberkante der zwei Seitenwände 172' sind jeweils Haltenasen 182' ausgebildet.

Die Anordnung der Rasteinrichtung 173' ist an die Anordnung des elastischen Steges 220 angepaßt. Folglich ist es möglich, den Einsatz 150 auch dann in Längsrichtung zur Höhenverstellung zu bewegen, wenn der Adapter 210 in die Betriebsposition eingesetzt ist. Dabei wird die Rastnase 174 an dem elastischen Steg 176' seitlich ausgelenkt, was möglich ist durch die elastische Ausbildung des Steges 220.

Sofern der Grundkörper 152' ohne die Langlöcher, also ohne elastischen Steg 220, ausgebildet ist, wie es bei herkömmlichen V-Hobeln der Fall ist, ist eine relative axiale Verschiebung zwischen Adapter 210 und Einsatz 190 nur dann möglich, wenn der Adapter 210 aus der Betriebsposition entnommen ist.

In der Betriebsposition ist ein seitliches Ausweichen der Nase 174' dann nicht möglich.

Hierdurch kann die Anordnung aus Adapter 210 und Einsatz 190 in sich stabil in der Aufnahme 212 gehalten werden. Das Verstellen der Schnittstärke ist trotzdem vergleichsweise einfach. Hierzu wird lediglich die Gesamtanordnung aus Adapter 210 und Einsatz 190 kurz aus der Aufnahme 212 entnommen. Anschließend werden der Einsatz 190 und der Adapter 210 axial gegeneinander verschoben. Anschließend wird die Gesamtanordnung wieder in die Aufnahme 212 in die Betriebsposition eingesetzt.

Auch bei dem Küchengerät 152 ist eine Schnittstärkenverstellung durch glattflächige, massive Teile realisiert, so daß das Küchengerät 152 insgesamt leicht zu reinigen und robust in der Handhabung ist.

Es versteht sich, daß eine Anordnung aus Adapter 210 und Einsatz 190 ein selbständig vertreibbares Produkt ist, das als "Nachrüstsatz" für existierende V-Hobel herkömmlicher Bauart verkaufbar ist.

Es versteht sich, daß die bevorzugten Ausgestaltungen gemäß den Figuren 6 bis 8 alternativ genauso auf die Küchengeräte 10, 40, 150, 150' angewendet werden können. Die Ausführungsformen der Figuren 6 und 7 können auch auf das Küchengerät 60 angewendet werden.

## Patentansprüche

1. Küchengerät (10;40;60;80;150) zum Schneiden von Schneidgut wie Gemüse, Obst, etc., mit
- einem Grundkörper (12;42;81;152;152',210),
- einer Führungsfläche (20;194), auf der das Schneidgut hin- und herbewegbar ist,
- einem Messer (14;86;160), das zum Schneiden gegenüber der Führungsfläche (20;194) versetzt angeordnet ist, so daß von einem auf der Führungsfläche (20;194) in Führungsrichtung (36) auf das Messer (14;86;160) zu bewegten Schneidgut eine Stück abgeschnitten wird, wobei der Versatz zwischen dem Messer (14;86;160) und der Führungsfläche (20;194) die Schnittstärke (98) bestimmt, und
- einem auswechselbaren Einsatz (24;48;62;88;190) zur Veränderung der Schnittstärke,
**dadurch gekennzeichnet, daß**
der Einsatz (24;48;62;88;190) im eingesetzten Zustand im Ganzen an dem Grundkörper (12;42;81;152;152',210) beweglich gelagert ist und in unterschiedlichen Positionen an dem Grundkörper (12;42;81;152;152',210) festlegbar ist, um die Schnittstärke (98) zu verändern.

2. Küchengerät nach Anspruch 1, **dadurch gekennzeichnet, daß** der Einsatz (24;48;88;190) im eingesetzten Zustand im wesentlichen parallel zur Führungsrichtung (36) versetzbar gelagert und in unterschiedlichen Parallelversatzpositionen an dem Grundkörper (12;42;81;152;152',210) festlegbar ist, um die Schnittstärke zu verändern.

3. Küchengerät nach Anspruch 2, **dadurch gekennzeichnet, daß** eine Parallelführung (90;130) zwischen dem Grundkörper (81;152;152',210) und dem Einsatz (88; 190) wenigstens zwei Rampenführungen (92,102;132,134;166,168,170,200) aufweist, die so angeordnet sind, daß ein Verschieben des Einsatzes (88;190) in einer ersten Richtung (36) zwangsweise einen Versatz in einer Richtung senkrecht hierzu bewirkt.

4. Küchengerät (80;150) zum Schneiden von Schneidgut wie Gemüse, Obst, etc., mit
- einem Grundkörper (81;152;210),
- einer Führungsfläche (20; 194), auf der das Schneidgut hin- und herbewegbar ist,
- einem Messer (86;160), das zum Schneiden gegenüber der Führungsfläche (20;194) versetzt angeordnet ist, so daß von einem auf der Führungsfläche (20;194) in Führungsrichtung auf das Messer (86;160) zu bewegten Schneidgut eine Stück abgeschnitten wird, wobei der Versatz zwischen dem Messer (86;160) und der Führungsfläche (20;194) die Schnittstärke (98) bestimmt, und
- einem auswechselbaren Einsatz (88;190) zur Veränderung der Schnittstärke,
**dadurch gekennzeichnet, daß**
der Einsatz (88;190) gegenüber einer Aufnahme (162) des Grundkörpers (81;152;152,210) in Führungsrichtung (36) beweglich ausgebildet ist und daß an der Aufnahme (162) und/oder an dem Einsatz (88;190) Rampenführungen (92,102; 132,134;166,168,170,200) vorgesehen sind, so daß eine Bewegung des Einsatzes (88;190) in Führungsrichtung (36) eine Bewegung quer zur Führungsrichtung (36) bewirkt, um die Schnittstärke (98) zu verstellen.

5. Küchengerät nach Anspruch 4, **dadurch gekennzeichnet, daß** die Aufnahme (162) einstückig mit dem Grundkörper (152) ausgebildet ist.

6. Küchengerät nach Anspruch 4, **dadurch gekennzeichnet, daß** die Aufnahme (162') an einem Adapter (210) ausgebildet ist, der an dem Grundkörper (152') in einer Betriebsposition festlegbar ist.

7. Küchengerät nach Anspruch 6, **dadurch gekennzeichnet, daß** der Adapter (210) in Führungsrichtung in den Grundkörper (152') einschiebbar ist und in der Betriebsposition einrastet.

8. Küchengerät nach Anspruch 6 oder 7, **dadurch gekennzeichnet, daß** der Einsatz (190) gegenüber der Aufnahme (162') in Führungsrichtung (36) beweglich ausgebildet ist, wenn der Adapter (210) in der Betriebsposition festgelegt ist.

9. Küchengerät nach Anspruch 6 oder 7, **dadurch gekennzeichnet, daß** der Einsatz (190) gegenüber der Aufnahme (162') beweglich ist, wenn der Adapter (210) aus der Betriebsposition entnommen ist, und der Einsatz (190) gegenüber der Aufnahme (162') nicht beweglich ist, wenn der Adapter (210) in der Betriebsposition festgelegt ist.

10. Küchengerät nach einem der Ansprüche 3 - 9, **dadurch gekennzeichnet, daß** der Winkel (94;169) der Rampenführungen (92,102;132,134;166,168,170,200) in bezug auf die Führungsfläche (20) im Bereich zwischen 5° und 50° liegt, vorzugsweise im Bereich zwischen 5° und 30°.

11. Küchengerät nach einem der Ansprüche 3 - 9, **dadurch gekennzeichnet, daß** die Rampenführungen (90,102;132, 134;166,168,170,200) Rampen am Grundkörper (81;152;152, 210) aufweisen, auf denen Gegenstücke (96;136;196,198) des Einsatzes (88;190) aufliegen.

12. Küchengerät nach Anspruch 11, **dadurch gekennzeichnet, daß** wenigstens zwei Rampenführungen (90;132,134) an gegenüberliegenden Seiten des Grundkörpers (81) ausgebildet sind und daß die Gleitstücke (96;136) durch Stifte (96;136) gebildet sind, die gegenüber Seiten des Einsatzes (88) vorstehen.

13. Küchengerät nach einem der Ansprüche 3 - 11, **dadurch gekennzeichnet, daß** wenigstens ein zentraler Rampenabschnitt (102;166,168,184) unterhalb des Einsatzes (88;190) angeordnet ist, um den Einsatz (88;190) abzustützen.

14. Küchengerät nach Anspruch 13, **dadurch gekennzeichnet, daß** der zentrale Rampenabschnitt (102;166,168, 184) benachbart zu dem Messer (86;160) angeordnet ist.

15. Küchengerät nach Anspruch 1, **dadurch gekennzeichnet, daß** der Einsatz (62) im eingesetzten Zustand um eine versetzt zum Messer (14;86) angeordnete Schwenkachse (64) verschwenkbar gelagert und in unterschiedlichen Schwenkpositionen an dem Grundkörper (60) festlegbar ist, um die Schnittstärke zu verändern.

16. Küchengerät nach einem der Ansprüche 1 - 15, **dadurch gekennzeichnet, daß** die Schnittstärke (98) stufenlos einstellbar ist.

17. Küchengerät nach Anspruch 16, **gekennzeichnet durch** eine Klemmeinrichtung (34), um den Einsatz (24;48;62) in einer beliebigen Position an dem Grundkörper (12;42) festzulegen.

18. Küchengerät nach einem der Ansprüche 1 - 15, **dadurch gekennzeichnet, daß** die Schnittstärke (98) in Stufen einstellbar ist.

19. Küchengerät nach Anspruch 18, **gekennzeichnet durch** eine Rasteinrichtung (108;173) zum Festlegen des Einsatzes (88) in einer von mehreren Positionen an dem Grundkörper (81;152;152,210).

20. Küchengerät nach einem der Ansprüche 1 - 19, **dadurch gekennzeichnet, daß** der Einsatz (24;48;62;88;190) in eine Position versetzbar ist, in der die dem Messer (14;86;160) gegenüberliegende Kante der Führungsfläche (20) auf der Höhe oder oberhalb der Schneide des Messers (14;86;160) liegt.

21. Küchengerät nach einem der Ansprüche 1 - 20, **dadurch gekennzeichnet, daß** bei einem Einsatz (88A) an der Führungsfläche (20) eine quer zur Führungsrichtung (36) ausgerichtete Reihe von senkrechten Messern (106;120) vorgesehen ist.

22. Küchengerät nach Anspruch 21, **dadurch gekennzeichnet, daß** der Einsatz (88A) in eine Position versetzbar ist, in der die Oberseite der Messerreihe (106;120) gegenüber der Oberseite des Messer (14;86) um ein Maß (124) übersteht, das wenigstens so groß ist wie die Schnittstärke (98).

23. Anordnung aus einem Adapter (210) und einem Einsatz (190) für ein Küchengerät nach einem der Ansprüche 6 - 9.

## Claims

1. A kitchen appliance (10; 40; 60; 80; 150) for cutting cuttable material such as vegetables, fruit, etc., with
a main body (12; 42; 81; 152; 152', 210),
a guide surface (20; 194) on which the cuttable material can be moved to and fro,
a blade (14; 86; 160) which, for cutting, is arranged offset in relation to the guide surface (20; 194) so that a piece is cut off from a cuttable material moved on the guide surface (20; 194) in the guide direction (36) toward the blade (14; 86; 160), the offset between the blade (14; 86; 160) and the guide surface (20; 194) determining the cutting thickness (98), and
with an exchangeable insert (24; 48; 62; 88; 190) for modifying the cutting thickness,
wherein
the insert (24; 48; 62; 88; 190), in the inserted state, is mounted so as to be fully movable on the main body (12; 42; 81; 152; 152', 210) and can be fixed in different positions on the main body (12; 42; 81; 152; 152', 210) in order to modify the cutting thickness (98).

2. The kitchen appliance as claimed in claim 1, wherein the insert (24; 48; 88; 190), in the inserted state, is mounted so as to be displaceable substantially parallel to the guide direction (36) and can be fixed in different parallel displacement positions on the main body (12; 42; 81; 152; 152', 210) in order to modify the cutting thickness.

3. The kitchen appliance as claimed in claim 2, wherein a parallel guide (90; 130) between the main body (81; 152; 152', 210) and the insert (88; 190) has at least two ramp guides (92, 102; 132, 134; 166, 168, 170, 200) which are arranged in such a way that a displacement of the insert (88; 190) in a first direction (36) necessarily causes a movement in a direction perpendicular thereto.

4. A kitchen appliance (80; 150) for cutting cuttable material such as vegetables, fruit, etc., with
a main body (81; 152; 210),
a guide surface (20; 194) on which the cuttable material can be moved to and fro,
a blade (86; 160) which, for cutting, is arranged offset in relation to the guide surface (20; 194) so that a piece is cut off from a cuttable material moved on the guide surface (20; 194) in the guide direction toward the blade (86; 160), the offset between the blade (86; 160) and the guide surface (20; 194) determining the cutting thickness (98), and
with an exchangeable insert (88; 190) for modifying the cutting thickness,
wherein
the insert (88; 190) is designed to be movable in relation to a receiving seat (162) of the main body (81; 152; 152, 210) in the guide direction (36), and wherein ramp guides (92, 102; 132, 134; 166, 168, 170, 200) are provided on the receiving seat (162) and/or on the insert (88; 190) so that a movement of the insert (88; 190) in the guide direction (36) causes a movement transverse to the guide direction (36) so as to adjust the cutting thickness (98).

5. The kitchen appliance as claimed in claim 4, wherein the receiving seat (162) is made in one piece with the main body (152).

6. The kitchen appliance as claimed in claim 4, wherein the receiving seat (162') is formed on an adapter (210) which can be fixed on the main body (152') in an operating position.

7. The kitchen appliance as claimed in claim 6, wherein the adapter (210) can be pushed into the main body (152') in the guide direction and locks in the operating position.

8. The kitchen appliance as claimed in claim 6 or 7, wherein the insert (190) is designed to be movable in relation to the receiving seat (162') in the guide direction (36) when the adapter (210) is fixed in the operating position.

9. The kitchen appliance as claimed in claim 6 or 7, wherein the insert (190) is movable in relation to the receiving seat (162') when the adapter (210) is removed from the operating position, and the insert (190) is not movable in relation to the receiving seat (162') when the adapter (210) is fixed in the operating position.

10. The kitchen appliance as claimed in one of claims 3 - 9, wherein the angle (94; 169) of the ramp guides (92, 102; 132, 134; 166, 168, 170, 200) with respect to the guide surface (20) is in the range of between 5° and 50°, preferably in the range of between 5° and 30°.

11. The kitchen appliance as claimed in one of claims 3 - 9, wherein the ramp guides (90, 102; 132, 134; 166, 168, 170, 200) have ramps on the main body (81; 152; 152, 210) on which mating pieces (96; 136; 196, 198) of the insert (88; 190) lie.

12. The kitchen appliance as claimed in claim 11, wherein at least two ramp guides (90; 132, 134) are formed on opposite sides of the main body (81), and wherein the slide pieces (96; 136) are formed by pins (96; 136) which protrude from sides of the insert (88).

13. The kitchen appliance as claimed in one of claims 3 - 11, wherein at least one central ramp portion (102; 166, 168, 184) is arranged underneath the insert (88; 190) in order to support the insert (88; 190).

14. The kitchen appliance as claimed in claim 13, wherein the central ramp portion (102; 166, 168, 184) is arranged adjacent to the blade (86; 160).

15. The kitchen appliance as claimed in claim 1, wherein the insert (62), in the inserted state, is mounted so as to be pivotable about a pivot axis (64) arranged offset in relation to the blade (14; 86) and can be fixed in different pivot positions on the main body (60) in order to modify the cutting thickness.

16. The kitchen appliance as claimed in one of claims 1 - 15, wherein the cutting thickness (98) can be adjusted steplessly.

17. The kitchen appliance as claimed in claim 16, having a clamping device (34) in order to fix the insert (24; 48; 62) in a desired position on the main body (12; 42).

18. The kitchen appliance as claimed in one of claims 1 - 15, wherein the cutting thickness (98) can be adjusted in steps.

19. The kitchen appliance as claimed in claim 18, having a locking device (108; 173) for fixing the insert (88) in one of several positions on the main body (81; 152; 152, 210).

20. The kitchen appliance as claimed in one of claims 1 - 19, wherein the insert (24; 48; 62; 88; 190) can be set into a position in which the edge of the guide surface (20) lying opposite the blade (14; 86; 160) lies level with or above the cutting edge of the blade (14; 86; 160).

21. The kitchen appliance as claimed in one of claims 1 - 20, wherein a row of perpendicular blades (106; 210) oriented transversely with respect to the guide direction (36) is provided on the guide surface (20) of an insert (88A).

22. The kitchen appliance as claimed in claim 21, wherein the insert (88A) can be set into a position in which the top of the row of blades (106; 120) protrudes relative to the top of the blade (14; 86) by an extent (124) which is at least as great as the cutting thickness (98).

23. An arrangement comprising an adapter (210) and an insert (190) for the kitchen appliance as claimed in one of claims 6 - 9.

## Revendications

1. Ustensile de cuisine (10 ; 40 ; 60 ; 80 ; 150) pour couper des produits tels que légumes, fruits, etc., comportant
- un corps de base (12 ; 42 ; 81 ; 152 ; 152', 210),
- une surface de guidage (20 ; 194) sur laquelle le produit à couper est déplaçable dans un sens et dans l'autre,
- un couteau (14 ; 86 ; 160) qui, pour la coupe, est disposé décalé par rapport à la surface de guidage (20 ; 194), ce qui fait qu'un morceau d'un produit à couper, déplacé sur la surface de guidage (20 ; 194) dans la direction de guidage (36), vers le couteau (14 ; 86 ; 160), est découpé, le décalage entre le couteau (14 ; 86 ; 160) et la surface de guidage (20 ; 194) déterminant l'épaisseur de coupe (98), et
- un insert (24 ; 48 ; 62 ; 88 ; 190) échangeable pour modifier l'épaisseur de coupe,
**caractérisé en ce que**
à l'état inséré, l'insert (24 ; 48 ; 62 ; 88 ; 190) est monté mobile dans son entier sur le corps de base (12 ; 42 ; 81 ; 162 ; 152', 210) et peut être fixé dans différentes positions sur le corps de base (12 ; 42 ; 81 ; 152 ; 152', 210), pour modifier l'épaisseur de coupe (98).

2. Ustensile de cuisine selon la revendication 1, **caractérisé en ce qu'**à l'état monté, l'insert (24 ; 48 ; 88 ; 190) est monté déplaçable sensiblement parallèlement à la direction de guidage (36) et peut être fixé sur le corps de base (12 ; 42 ; 81 ; 152 ; 152', 210) dans différentes positions de décalage parallèles, afin de modifier l'épaisseur de coupe,

3. Ustensile de cuisine selon la revendication 2, **caractérisé en ce qu'**un guide parallèle (90 ; 130) entre le corps de base (81 ; 152 ; 152', 210) et l'insert (88 ; 190) comporte au moins deux guides à rampe (92, 102 ; 132, 134 ; 166, 168, 170, 200) qui sont disposés de manière qu'un coulissement de l'insert (88 ; 190) dans une première direction (36) provoque forcément un décalage dans une direction perpendiculaire à celle-ci.

4. Ustensile de cuisine (80 ; 150) pour couper des produits tels que légumes, fruits, etc., comportant
- un corps de base (81 ; 152 ; 210),
- une surface de guidage (20 ; 194) sur laquelle le produit à couper est déplaçable dans un sens et dans l'autre,
- un couteau (86 ; 160) qui, pour la coupe, est disposé décalé par rapport à la surface de guidage (20 ; 194), ce qui fait qu'un morceau d'un produit à couper, déplacé sur la surface de guidage (20 ; 194) dans la direction de guidage (36), vers le couteau (86 ; 160), est découpé, le décalage entre le couteau (86 ; 160) et la surface de guidage (20 ; 194) déterminant l'épaisseur de coupe (98), et
- un insert (88 ; 190) échangeable pour modifier l'épaisseur de coupe,
**caractérisé en ce que**
l'insert (88 ; 190) est réalisé mobile par rapport à un logement (162) du corps de base (81 ; 152 ; 152', 210) dans la direction de guidage (36), et **en ce que** sur le logement (162) et/ou sur l'insert (88 ; 190) sont prévus des guides à rampe (92, 102 ; 132, 134 ; 166, 168, 170, 200), ce qui fait qu'un déplacement de l'insert (88 ; 190) dans la direction de guidage (36) provoque un déplacement transversalement à la direction de guidage (36), afin de régler l'épaisseur de coupe (98).

5. Ustensile de cuisine selon la revendication 4, **caractérisé en ce que** le logement (162) est réalisé d'une seule pièce avec le corps de base (152).

6. Ustensile de cuisine selon la revendication 4, **caractérisé en ce que** le logement (162') est réalisé sur un adaptateur (210) qui peut être fixé sur le corps de base (152') dans une position de fonctionnement.

7. Ustensile de cuisine selon la revendication 6, **caractérisé en ce que** l'adaptateur (210) peut être introduit dans le corps de base (152'), dans la direction de guidage, et s'accroche dans la position de fonctionnement.

8. Ustensile de cuisine selon la revendication 6 ou 7, **caractérisé en ce que** l'insert (190) est réalisé mobile par rapport au logement (162'), dans la direction de guidage (36), lorsque l'adaptateur (210) est fixé dans la position de fonctionnement.

9. Ustensile de cuisine selon la revendication 6 ou 7, **caractérisé en ce que** l'insert (190) est mobile par rapport au logement (162') lorsque l'adaptateur (210) est enlevé de la position de fonctionnement, et l'insert (190) n'est pas mobile par rapport au logement (162'), lorsque l'adaptateur (210) est fixé dans la position de fonctionnement.

10. Ustensile de cuisine selon l'une des revendications 3 à 9, **caractérisé en ce que** l'angle (94, 169) des guides à rampe (92, 102 ; 132, 134 ; 166, 168, 170, 200) se situe, par rapport à la surface de guidage (20), entre 5° et 50°, de préférence entre 5° et 30°.

11. Ustensile de cuisine selon l'une des revendications 3 à 9, **caractérisé en ce que** les guides à rampe (90, 102; 132, 134 ; 166, 168, 170, 200) comportent des rampes sur le corps de base (81 ; 152 ; 152', 210) sur lesquelles reposent des contre-pièces (96 ; 136 ; 196, 198) de l'insert (88 ; 190).

12. Ustensile de cuisine selon la revendication 11, **caractérisé en ce qu'**au moins deux guides à rampe (90 ; 132, 134) sont réalisés sur des côtés opposés du corps de base (81), et **en ce que** les coulisseaux (96 ; 136) sont formés par des broches (96 ; 136) qui dépassent par rapport à des côtés de l'insert (88).

13. Ustensile de cuisine selon l'une des revendications 3 à 11, **caractérisé en ce qu'**au moins un tronçon de rampe central (102 ; 166, 168, 184) est disposé au-dessous de l'insert (88 ; 190) afin de soutenir l'insert (88 ; 190).

14. Ustensile de cuisine selon la revendication 13, **caractérisé en ce que** le tronçon de rampe central (102 ; 166, 168, 184) est disposé au voisinage du couteau (86 ; 160).

15. Ustensile de cuisine selon la revendication 1, **caractérisé en ce qu'**à l'état inséré, l'insert (62) est monté de manière à pouvoir pivoter autour d'un axe de pivotement (64) disposé décalé par rapport au couteau (14 ; 86), et peut être fixé dans différentes positions de pivotement sur le corps de base (60), afin de modifier l'épaisseur de coupe.

16. Ustensile de cuisine selon l'une des revendications 1 à 15, **caractérisé en ce que** l'épaisseur de coupe (98) est réglable en continu.

17. Ustensile de cuisine selon la revendication 16, **caractérisé par** un dispositif de serrage (34) pour fixer l'insert (24 ; 48 ; 62) dans une position quelconque sur le corps de base (12 ; 42).

18. Ustensile de cuisine selon l'une des revendications 1 à 15, **caractérisé en ce que** l'épaisseur de coupe (98) est réglable par crans.

19. Ustensile de cuisine selon la revendication 18, **caractérisé par** un dispositif d'encliquetage (108 ; 173) pour fixer l'insert (88) dans une de plusieurs positions sur le corps de base (81 ; 152 ; 152', 210).

20. Ustensile de cuisine selon l'une des revendications 1 à 19, **caractérisé en ce que** l'insert (24 ; 48 ; 62 ; 88 ; 190) est déplaçable dans une position dans laquelle l'arête, opposée au couteau (14 ; 86 ; 160), de la surface de guidage (20), se situe à la hauteur ou au-dessus du tranchant du couteau (14 ; 86 ; 160).

21. Ustensile de cuisine selon l'une des revendications 1 à 20, **caractérisé en ce que** dans le cas d'un insert (88A) sur la surface de guidage (20), il est prévu une série de couteaux verticaux (106; 120), orientée transversalement à la direction de guidage (36).

22. Ustensile de cuisine selon la revendication 21, **caractérisé en ce que** l'insert (88A) peut être déplacé dans une position dans laquelle le côté supérieur de la série de couteaux (106 ; 120) dépasse, par rapport au côté supérieur du couteau (14 ; 86), d'une distance (124) qui est au moins égale à l'épaisseur de coupe (98).

23. Ensemble constitué d'un adaptateur (210) et d'un insert (190) pour un ustensile de cuisine selon l'une des revendications 6 à 9.
